# EUROPEAN PATENT APPLICATION

(11) **EP 1 958 679 A1**
(43) Date of publication of application: **20.08.2008**
(21) Application number: 06781363.4
(22) Date of filing: 20.07.2006
(51) Int. Cl.: A63F 13/00, A63F 13/10

(54) **GAME PROGRAM, GAME MACHINE, AND GAME METHOD**

(30) Priority: 01.12.2005 JP 2005347463
(71) Applicant: Konami Digital Entertainment Co., Ltd., Minato-ku Tokyo 106-6114 (JP)
(72) Inventor: OKUBO, Satoru, Tokyo 1066114 (JP)
(74) Representative: Driver, Virginia Rozanne
(86) International application number: PCT/JP2006/314408
(87) International publication number: WO 2007/063623

(57) **Abstract**

A game with reality is realized with a game program. In a supporter's music image selecting processing of Step S11, rhythm, tempo, and chord that correspond to an image for a supporter's music is determined. In a player-information quantifying processing of Step S12, a player- numeric value that corresponds to information of a player character is determined. In a player- numeric value quantifying processing of Step S13, player-numeric values are compared, and comparative data is stored. In a supporter's music data quantifying processing of Step S 14, a variety of information for generating a supporter's music for a player character are quantified based on the player-numeric value and the comparative data. In a supporter's music data creating processing of Step S15, supporter's music data, which will be melody fitting in with a player character, is created based on rhythm, tempo, chord, and a supporter's music data-numeric value.

## Description

### [Field of the Invention]

The preset invention relates to a game program, particularly to a game program for realizing a game in which a game character is caused to perform an action with a computer. Furthermore, the present invention relates to a game device and a game method, which are realized by the game program.

### [Background Art]

Various games have been proposed in the past. As one of such games, a competitive video game, such as a baseball video game, has been known that a player character displayed in a monitor is caused to perform an action for playing a competitive game. In this type of baseball game, a game player is allowed to select a baseball team from a variety of baseball teams to which each of baseball player characters belongs, and is allowed to play a game with other game player who selected other baseball team, or a computer.

Some of the baseball games of this type have been known that a supporter's music, which is created for a baseball team selected by a game player, is configured to be played, for instance, while the baseball team selected by the game player is batting (e.g., Patent Reference 1). In addition, a supporter's music, which is created for a baseball team selected by an opponent game player, is configured to be played while the baseball team selected by the opponent game player is batting. This type of supporter's music is a supporter's music created exclusively for an individual baseball team, and each of baseball teams has a different music. Also, while a baseball team is batting, not only a supporter's music created exclusively for a baseball team, but also a supporter's music created exclusively for a player character in the batter's box is configured to be allowed to be played. This type of supporter's music is preliminarily stored as melody in a memory, or is saved in the memory after a game player performs music creation, and is configured to be automatically played while a baseball team selected by the game player is batting.
[Patent Reference 1] Japanese Patent Application Publication No. JP-A-H11-000468

### [Disclosure of the Invention]

In the above described conventional baseball game in which a supporter's music is allowed to be played, a supporter's music created exclusively for a player character is configured to be played. Here, the supporter's music, which is created exclusively for and corresponds to a player character, is preliminarily stored in a memory, or is saved in the memory after a game player performs music creation, for instance. Especially, in a baseball game in which a game player develops a player character (so called success mode), a game player is allowed to select a supporter's music preliminarily stored in a memory, or is allowed to create a supporter's music of a player character, which is matched with the game player's preference after the game player performs music creation.

However, in the real-world baseball, as a baseball player's ability and/or popularity increase(s), a group of supporters is generally supposed to create a supporter's music exclusively for the baseball player regardless of the baseball player's intension. Because of this, in the conventional success mode, a game player is allowed to create an arbitrary supporter's music regardless of baseball player's development, but it is impossible to create a supporter's music without the game player's intension depending on the player character's development as seen in the real-world baseball. Therefore, it is very difficult to realize a baseball game with reality, which is more like the real-world baseball.

An object of the present invention is to realize a game with reality with a game program.

A game program in accordance with claim 1 is a game program for realizing the following functions in a computer that is capable of realizing a game in which a game character is cuased to perform an action.

(1) A game information quantifying function for quantifying information of a game character depending on a predetermined game condition

(2) A game sound quantifying function for quantifying a variety of information for generating a game sound depending on a plurality of numeric values obtained by the game information quantifying function.

(3) A game sound generating function for generating a game sound depending on a plurality of numeric values obtained by the game sound quantifying function.

In a game realized by this program, first of all, in the game information quantifying function, information of a game character is quantified depending on a predetermined game condition. Here, the information of a game character is information for indicating game character's specific ability and/or state. For example, information of a player character in a baseball game is the general ability such as baseball player's power, striking power, pitching strength, defensive skill, running ability, error avoidance ability, physical strength, and ball trajectory, and the specialized ability such as sense, power hitter, average hitter, and spray hitter. In addition, the predetermined game condition is a condition for judging whether progress of a game, the present stage, and the like, are in some sort of state. For example, a predetermined condition in a baseball game is a condition for judging whether the number of games, the number of victory and defeat, baseball player's popularity, record, and the like, are greater than or equal to a predetermined value. Next, in the game sound quantifying function, a variety of information for generating a game sound is quantified depending on a plurality of numeric values obtained by the game information quantifying function. Here, the variety of information for generating a game sound is information such as a preliminarily set music pattern, music pitch, rhythm, tempo, chord, and a cheer pattern. Next, in the game sound generating function, a game sound is generated depending on a plurality of numeric values obtained by the game sound quantifying function.

For example, a case is considered that a baseball game in which a player character is caused to perform an action is realized and a supporter's music corresponding to a player character is played therein. Here, information of a player character such as baseball player's power and striking power is quantified depending on a predetermined game condition such as the number of games, and the number of victory and defeat. Next, a variety of information for generating a supporter's music for a player character, such as pitch, rhythm, and tempo of the music, are quantified by the game sound quantifying function, depending on a plurality of numeric values obtained by the game information quantifying function. Next, a supporter's music for a player character is created by the game sound generating function depending on a plurality of numeric values obtained by the game sound quantifying function.

In the game program, information of a game character is quantified by the game information quantifying function depending on a predetermined game condition, and a variety of information for generating a game sound is quantified by the game sound quantifying function depending on a plurality of numeric values obtained by the game information quantifying function. Furthermore, a game sound is generated by the game sound generating function depending on a plurality of numeric values obtained by the game information quantifying function. Here, when a supporter's music corresponding to a player character is played, the created supporter's music is determined by information of a game character corresponding to a predetermined game condition. Therefore, it is possible to create a supporter's music without game player's intension depending on player character's development. Accordingly, it is possible to realize a baseball game with reality, which is more like the real-world baseball.

A game program in accordance with claim 2 is the game program according to claim 1 for further realizing the following functions.

(4) An event judging function for judging whether a predetermined event is performed.

(5) A game sound playing function for playing a game sound generated by the game sound generating function when the predetermined event is judged to be performed by the event judging function.

In a game realized with this program, the event judging function and the game sound playing function are further included. First, in the event judging function, it is judged whether a predetermined event is performed. Here, the predetermined event is different from the predetermined game condition. For example, a predetermined event in a baseball game is an event for which an entrance music or a supporter's music for a player character is required to be played, such as an event that a batter character is in the batter box, or an event that a new pitcher character replaces the present pitcher character and takes the mound. Next, in the game sound playing function, when the predetermined event is judged to be performed by the event judging function, a game sound generated by the game sound generating function is played.

Here, when a supporter's music corresponding to a player character is played, for example, when a predetermined event that a batter character is in the batter box is judged to be performed, it is possible to play a supporter's music without game player's intension depending on the player character's development.

A game program in accordance with claim 3 is a game device for realizing a game in which a game character is caused to perform an action. In the game device, game information quantifying means, game sound quantifying means, and game sound generating means are included. In the game information quantifying means, information of a game character is quantified depending on a predetermined game condition. In the game sound quantifying means, a variety of information for generating a game sound is quantified depending on a plurality of numeric values obtained by the game information quantifying means. In the game sound generating means, a game sound is generated depending on a plurality of numeric values obtained by the game sound quantifying means.

A game method in accordance with claim 4 is a game method for realizing a game in which a game character is caused to perform an action with a computer. In the game method, a game information quantifying step, a game sound quantifying step, and a game sound generating step are included. In the game information quantifying step, information of a game character is quantified depending on a predetermined game condition. In the game sound quantifying step, a variety of information for generating a game sound is quantified depending on a plurality of numeric values obtained by the game information quantifying step. In the game sound generating step, a game sound is generated depending on a plurality of numeric values obtained by the game sound quantifying step.

### [Brief Description of the Drawings]

[Fig. 1] Fig. 1 is a basic block diagram of a video game device in accordance with an embodiment of the present invention.
[Fig. 2] Fig. 2 is a functional block diagram as an example of the video game device.
[Fig. 3] Fig. 3 is a diagram for illustrating a sound setting supporter's music creation selection screen of a baseball game.
[Fig. 4] Fig. 4 is a diagram for illustrating an automatic composition starting screen of a supporter's music creation screen.
[Fig. 5] Fig. 5 is a diagram for illustrating an automatic composition selection screen of the supporter's music creation screen.
[Fig. 6] Fig. 6 is a diagram for illustrating an automatic composition currently-creating screen of the supporter's music creation screen.
[Fig. 7] Fig. 7 is a diagram for illustrating an automatic composition completing screen of the supporter's music creation screen.
[Fig. 8] Fig. 8 is a diagram for illustrating the supporter's music creation screen to be displayed when a note character is arranged in a note input field.
[Fig. 9] Fig. 9 is a diagram for illustrating the supporter's music creation screen to be displayed when the note characters are disposed to be aligned in the same height position.
[Fig. 10] Fig. 10 is a diagram for illustrating the supporter's music creation screen to be displayed when the length of the note character is changed in a pattern E.
[Fig. 11] Fig. 11 is a diagram for illustrating the supporter's music creation screen to be displayed when the length of the note character is changed in a pattern A.
[Fig. 12] Fig. 12 is a diagram for illustrating the supporter's music creation screen to be displayed when the length of the note character is changed in a pattern B.
[Fig. 13] Fig. 13 is a diagram for illustrating the supporter's music creation screen to be displayed when the length of the note character is changed in a pattern D.
[Fig. 14] Fig. 15 is a diagram for illustrating the supporter's music creation screen to be displayed when the length of the note character is changed in a pattern C.
[Fig. 15] Fig. 15 is a diagram for illustrating the supporter's music creation screen to be displayed when the length of the note character is changed in a pattern C.
[Fig. 16] Fig. 16 is a diagram for illustrating the supporter's music creation screen to be displayed when the length of the note character is changed in a pattern F.
[Fig. 17] Fig. 17 is a diagram for illustrating relations among rhythm, tempo, and chord that correspond to an image to be selected in a supporter's music image selection processing.
[Fig. 18] Fig. 18 is a flowchart regarding a supporter's music creation processing in the baseball game.
[Fig. 19] Fig. 19 is a flowchart regarding an automatic composition processing in the supporter's music creation processing.
[Fig. 20] Fig. 20 is a flowchart of an alternative embodiment, which corresponds to Fig. 19.
[Fig. 21] Fig. 21 is a diagram for illustrating a player development display screen in the baseball game.
[Fig. 22] Fig. 22 is a diagram for illustrating a list of player-numeric values of a player character.
[Fig. 23] Fig. 23 is a diagram for illustrating a list of player-variables of the player character, which is calculated based on the player-numeric values of the player character.
[Fig. 24] Fig. 24 is a diagram for illustrating relations of kinds of rhythm corresponding to the maximum value of the player-variables of the player character.
[Fig. 25] Fig. 25 is a diagram for illustrating relations of basic keys corresponding to numeric values calculated based on the player- numerical values of the player character.
[Fig. 26] Fig. 26 is a diagram for illustrating relations of kinds of tempo corresponding to numeric values calculated based on the player- numeric values of the player character.
[Fig. 27] Fig. 27 is a diagram for illustrating relations of existence/nonexistence of an intro corresponding to numeric values calculated based on the player-numeric values of the player character.
[Fig. 28] Fig. 28 is a diagram for illustrating relations of sort of cheers corresponding to numeric values calculated based on the player-numeric values of the player character.

### [Description of the Reference Numerals]

- 1: control unit
- 2: memory unit
- 3: image display unit
- 4: game sound output unit
- 5: operation input unit
- 7: CPU
- 13: speaker

- 17: controller
- 20: television monitor
- 25: sound supporter's music creation selection screen
- 30: supporter's music creation screen
- 31: piano key
- 32: note input field
- 33: note character
- 33a: rectangular character
- 33a: letter character
- 33c: graphic character
- 33d: selection symbol character
- 34: instrument pattern selection item
- 34a: instrument pattern display field
- 35: cheer pattern selection item
- 35a: cheer pattern display field
- 36: various mode setting selection item
- 36a: selection item for returning to previous screen
- 36b: selection item for saving
- 36c: selection item for repetition
- 36d: music rhythm setting item
- 36e: sample data selection setting item
- 36f: selection item for cancellation
- 36g: rhythm setting display item
- 36h: tempo setting display item
- 36i: selection cursor
- 36j: automatic composition selection item
- 40: automatic composition starting screen
- 41: selection item for deciding
- 42: selection cursor
- 43: automatic composition selection screen
- 44: supporter's music image selection item
- 45: selection cursor
- 46: automatic composition currently-creating screen
- 47: automatic composition completing screen
- 48: player development display screen
- 49: player's dialogue display screen
- 50: character displaying means
- 51: character operating means
- 52: game condition judging means
- 53: game information quantifying means
- 54: game sound quantifying means
- 55: game sound generating means
- 56: event judging means
- 57: game sound playing means

### [Best Mode for Carrying Out the Invention]

### [Configuration and operation of game device]

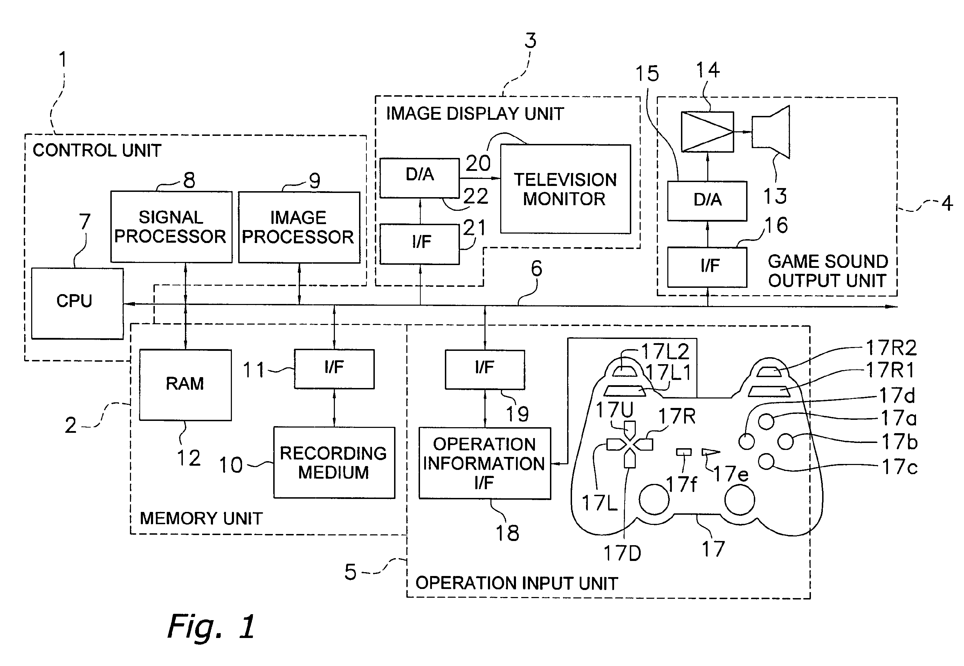

Fig. 1 shows the basic configuration of a game device in accordance with an embodiment of the present invention. As an example of the game device, a home video game device will be hereinafter explained. The home video game device includes a home video game console and a home television set. A recording medium 10 is configured to be allowed to be loaded in the home video game console. Game data is arbitrarily read out of the recording medium 10 and a game is executed. The content of the game executed herewith is displayed on the home television set.

The game system of the home video game device is made up of a control unit 1, a storage unit 2, an image display unit 3, a game sound output unit 4, and an operation input unit 5, and these units are connected to each other through a bus 6, respectively. This bus 6 includes an address bus, a data bus, a control bus, and the like. Here, the control unit 1, the storage unit 2, the game sound output unit 4, and the operation input unit 5 are included in the home video game console of the home video game device, and the image display unit 3 is included in the home television set.

The control unit 1 is provided for mainly controlling the progress of the entire game based on the game program. The control unit 1 is made up of a CPU (Central Processing Unit) 7, a signal processor 8, and an image processor 9, for instance. The CPU 7, the signal processor 8, and the image processor 9 are connected to each other through the bus 6. The CPU 7 interprets a command from a game program and performs a variety of data processing and data control. For example, the CPU 7 commands the signal processor 8 to provide the image data to the image processor. The signal processor 8 mainly performs computations in the three-dimensional space, position conversion computations from the three-dimensional space to a virtual three-dimensional space, a light source computation processing, and data generation and data processing of image data and sound data. The image processor 9 mainly performs a processing to write image data to be rendered to a RAM 12 based on the computation results and processing results of the signal processor 8.

The memory unit 2 is provided mainly for storing the program data, various types of data used for the program data, and the like. The storage unit 2 is made up of the recording medium 10, an interface circuit 11, and the RAM (Random Access Memory) 12, for instance. The interface circuit 11 is connected to the recording medium 10. The interface circuit 11 and the RAM 12 are connected through the bus 6. The recording medium 10 stores program data of the operation system, game data made up of image data, sound data, and various types of program data, and the like. For example, this recording medium 10 is a ROM (Read Only Memory) cassette, an optical disk, a flexible disk, or the like. The program data of the operating system, the game data, and the like are stored in this recording medium 10. Note that a card memory is also included in the category of the recording medium 10 and mainly used for storing various game parameters at the point of interruption when the game is interrupted. The RAM 12 is used for temporarily storing various types of data read out of the recording medium 10, and for temporarily recording the processing results from the control unit 1. In addition to various types of data, address data indicating the memory location of various types of data is stored in this RAM 12, and it is configured to be allowed to specify an arbitrary address and read/write data from/to the address.

The image display unit 3 is provided for mainly outputting the image data written to the RAM 12 by the image processor 9, the image data read out of the recording medium 10, and the like, as an image. This image display unit 3 is made up of a television monitor 20, an interface circuit 21, a D/A converter (Digital-to-Analog converter) 22, for instance. The D/A converter 22 is connected to the television monitor 20, and the interface circuit 21 is connected to the D/A converter 22. In addition, the bus 6 is connected to the interface circuit 21. Here, the image data is provided to the D/A converter 22 through the interface circuit 21, and is converted into an analog image signal in the D/A converter 22. Then, the analog image signal is outputted to the television monitor 20 as an image.

Here, the image data includes polygon data, texture data, and the like, for instance. The polygon data is the coordinate data of apexes forming the polygon. The texture data is used for setting texture with respect to the polygon, and is made up of texture specifying data and texture color data. The texture specifying data is data for associating the polygon and the texture, and the texture color data is data for specifying the texture color. Here, polygon address data and texture address data, both of which indicate memory location of each type of data, are associated with the polygon data and the texture data, respectively. With this type of image data, coordinate conversion and perspective projection conversion are performed with respect to the polygon data in the three-dimensional space (i.e., the three-dimensional polygon data) indicated with the polygon address data by the signal processor 8, based on the displacement data and the rotational data of the screen itself (i.e., point of sight). Accordingly, the polygon data is converted into the polygon data in the two-dimensional space (i.e., the two-dimensional polygon data). Then, a polygon outline is constituted with a plurality of two-dimensional polygon data, and texture data specified by the texture address data is written to the internal area of the polygon. Thus, it is possible to express objects made by applying texture to each polygon, that is, various characters.

The game sound output unit 4 is provided mainly for outputting the sound data read out of the recording medium 10 as the game sound. The game sound output unit 4 is made up of a speaker 13, an amplifier circuit 14, a D/A converter 15, and an interface circuit 16, for instance. The amplifier circuit 14 is connected to the speaker 13. The D/A converter 15 is connected to the amplifier circuit 14. The interface circuit 16 is connected to the D/A converter 15. In addition, the bus 6 is connected to the interface circuit 16. Here, the sound data is provided to the D/A converter 15 through the interface circuit 16 and is converted into an analog sound signal. The analog sound signal is amplified by the amplifier circuit 14 and is outputted from the speaker 13 as the game sound. ADPCM (Adaptive Differential Pulse Code Modulation) data, PCM (Pulse Code Modulation) data, and the like are included in the category of the sound data, for instance. In the case of the ADPCM data, it is possible to output the game sound from the speaker 13 with almost the same type of processing method as described above. In the case of the PCM data, if the PCM data is converted into the ADPCM data in the RAM 12, it is possible to output the game sound from the speaker 13 with the same type of processing method as described above.

The operation input unit 5 is mainly made up of a controller 17, an operation information interface circuit 18, and an interface circuit 19. The operation information interface circuit 18 is connected to the controller 17, and the interface circuit 19 is connected to the operation information interface circuit 18. In addition, the bus 6 is connected to the interface circuit 19.

The controller 17 is an operation unit used by the video game player for the purpose of inputting various operation commands, and transmits operation signals to the CPU 7 according to the video game player's operation. The controller 17 is provided with a first button 17a, a second button 17b, a third button 17c, a fourth button 17d, an up key 17U, a down key 17D, a left key 17L, a right key 17R, a L1 button 17L1, a L2 button 17L2, a R1 button 17R1, a R2 button 17R2, a start button 17e, a select button 17f, a left stick 17SL, and a right stick 17SR.

The up key 17U, the down key 17D, the left key 17L, and the right key 17R are used for providing the CPU 7 with a command to cause the characters and a cursor to move up, down, left, and right on the screen of the television monitor 20, for instance.

The start button 17e is used for commanding the CPU 7 to load the game program from the recording medium 10. In addition, a mode selection screen for setting various modes is configured to be displayed on the television monitor 20 if the start button 17e is pressed while the title screen is displayed on the television monitor 20.

The select button 17f is used for commanding the CPU 7 to execute various selections with respect to the game program loaded from the recording medium 10, for instance.

The left stick 17SL and the right stick 17SR are stick-shaped controllers with approximately the same configuration as a so-called joystick. This stick-shaped controller includes an upright stick. This stick is configured to be allowed to lean from the upright position to 360-degree directions including front, back, left, and right directions, centering around the fulcrum. The left stick 17SL and the right stick 17SR transmit x and y coordinate values with the origin corresponding to the upright position thereof to the CPU 7 through the operation information interface circuit 18 and the interface circuit 19 as the operation signal according to the direction and angle of the leaned stick.

Various functions are allocated to the first button 17a, the second button 17b, the third button 17c, the fourth button 17d, the L1 button 17L1, the L2 button 17L2, the R1 button 17R1, and the R2 button 17R2 according to the game program that is loaded from the recording medium 10. For example, the second button 17b and the third button 17c are used for commanding the CPU 7 to perform operations such as determination of a menu item and change of the screen to proceed to the next screen. The first button 17a and the fourth button 17d are used for commanding the CPU 7 to perform operations such as clearing or cancellation of the menu item and change of the screen to return to the previous screen.

Note that each button and each key provided in the controller 17 excluding the left stick 17SL and the right stick 17SR are configured to function as ON/OFF switches that becomes an on-state when pressed from the neutral position by the external pressure and becomes an off-state when the pressure is released and returns to the neutral position.

The general operations of the home video game device configured as described above will be hereinafter explained. If a power switch (not illustrated in the figure) is turned on and the game system 1 is powered on, the CPU 7 reads out image data, sound data, and program data from the recording medium 10 based on the operating system stored in the recording medium 10. All or part of the read-out data including the image data, the sound data, and the program data are stored in the RAM 12. Then, the CPU 7 issues commands for the image data and the sound data, both of which are stored in the RAM 12, based on the program data stored in the RAM 12.

In the case of image data, the signal processor 8 firstly performs positional computation, light source computation, and the like for a character in the three-dimensional space based on the command from the CPU 7. Next, the image processor 9 performs a processing of writing the image data to be rendered to the RAM 12 based on the computation results by the signal processor 8. Then, the image data written to the RAM 12 is provided to the D/A converter 22 through the interface circuit 21. Here, the image data is converted into an analog image signal by the D/A converter 22. Then, the image data is provided to the television monitor 20 and displayed as an image.

In the case of the sound data, the signal processor 8 firstly performs processing to generate and process sound data based on the command from the CPU 7. Here, processing, such as pitch conversion, noise addition, envelope setting, level setting, and reverb addition, is performed for the sound data. Next, the sound data is outputted from the signal processor 8 and is provided to the D/A converter 15 through the interface circuit 16. Here, the sound data is converted into an analog sound signal. Then, the sound data is outputted as the game sound from the speaker 13 through the amplifier circuit 14.

### [Summary of various processing in the game device]

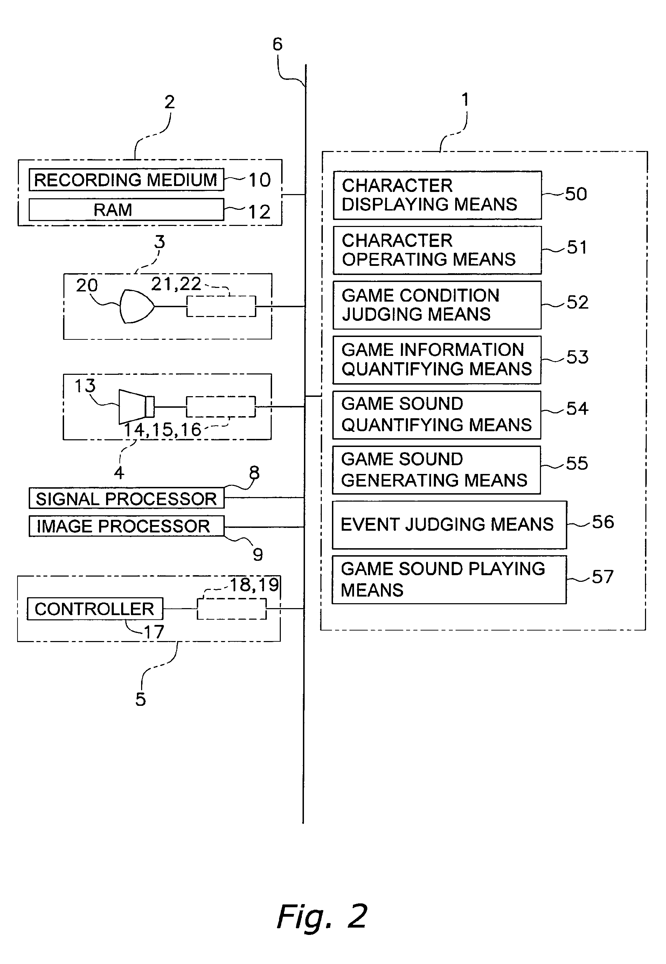

The game executed in the present game console is a baseball game, for instance. The present game console is configured to realize a game in which a game character displayed on the television monitor 20 is caused to perform an action. Fig. 2 is a functional block diagram for explaining functions that play a major role in the present invention. The control unit 1 mainly includes character displaying means 50, character operating means 51, game condition judging means 52, game information quantifying means 53, game sound quantifying means 54, game sound generating means 55, event judging means 56, and game sound playing means 57.

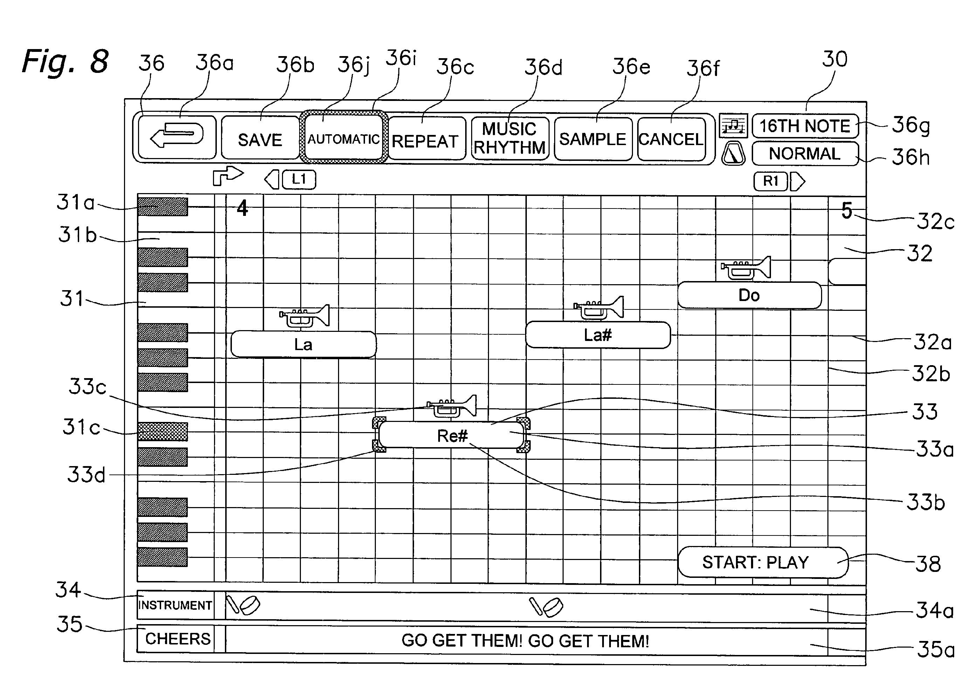

The character displaying means 50 includes a function of displaying a pitcher character, a batter character, and a note character 33 on the television monitor 20. In the character displaying means 50, a pitcher character (not illustrated in the figure) and a batter character (not illustrated in the figure) are displayed on the television monitor 20. In addition, in the character displaying means 50, the note character 33 is displayed in the supporter's music creation screen 30 illustrated in Fig. 8 on the television monitor 20.

In the means, when the game program is loaded, pitcher image data corresponding to the pitcher character, batter image data corresponding to the batter character, and note image data corresponding to the note character 33 are provided from the storage unit 2 (e.g., the recording medium 10) to the RAM 12, and is stored in the RAM 12. Here, the pitcher image data, the batter coordinate data, and note image data are recognized by the control unit 1 (e.g., the CPU 7). In addition, batter coordinate data for displaying the batter image data on the television monitor 20, pitcher coordinate data for displaying the pitcher image data on the television monitor 20, and note coordinate data for displaying the note image data on the television monitor 20 are provided from the storage unit 2 (e.g., the recording medium 10) to the RAM 12, and are stored in the RAM 12. Here, the pitcher image data, the batter coordinate data, and the note image data are recognized by the control unit 1 (e.g., the CPU 7). Then, the batter image data, the pitcher image data, and the note image data, which are stored in the RAM 12, are provided to the television monitor 20 through the image processor 9, based on the instruction by the CPU 7. Then, the batter image data, the pitcher image data, and the note image data are displayed in predetermined positions, respectively, on the television monitor 20 based on the batter coordinate data, the pitcher coordinate data, and the note coordinate data. Note that an instruction for displaying the batter image data, the pitcher image data, and the note image data in the predetermined position on the television monitor 20 is issued by the CPU 7.

The character operating means 51 includes a function of causing the pitcher character and the batter character to perform an action. In the character operating means 51, the pitcher character and the batter character are caused to perform an action.

In this means, when a signal for causing the pitcher character and the batter character to perform an action, which is transmitted from the controller 17, is recognized by the control unit 1 (e.g., the CPU 7), the pitcher image data corresponding to the pitcher character and the batter image data corresponding to the batter character are processed by the control unit 1 (e.g., the signal processor 8 and the image processor 9) based on an instruction from the CPU 7. Then, the processed image data are provided from the RAM 12 to the television monitor 20, and pitching motion of the pitcher character and swinging motion of the batter character are displayed on the television monitor 20 as motion pictures.

The game condition judging means 52 includes a function of judging whether a predetermined game condition is satisfied in the baseball game for the purpose of creating a supporter's music with respect to a player character. In the game condition judging means 52, depending on progress of a game in the baseball game, a variety of game condition judging tables stored in the storage unit 2 are referred to, and it is judged whether a predetermined game condition is satisfied based on a predetermined condition determining table. Here, that the predetermined game condition is satisfied means a state that a predetermined game condition including the number of games, the number of victory and defeat, popularity of a baseball player, and result, is greater than or equal to a predetermined value. Each of variables of the game condition judging table and the game condition determining table varies depending on progress of a game in the baseball game, and the variety of data are stored in the RAM 12.

Also, in the game condition judging means 52, the state that the predetermined game condition is satisfied further means a state that an automatic composition selection item 36j is selected in the supporter's music creation screen illustrated in Fig. 8 and then the present mode is moved to a composition mode. When the present mode is judged to be moved to the automatic composition mode by the game condition judging means 52, a flag for expressing that the present mode is moved to the automatic composition mode is set, and a variety of data including the flag are stored in the RAM 12.

The game information quantifying means 53 includes a function for quantifying information of a game character depending on a predetermined game condition. In the game information quantifying means 53, information of a game character, specifically, information for indicating game character's specific ability and/or state, which includes, for example, the general ability such as baseball player's power, striking power, pitching strength, defensive skill, running ability, error avoidance ability, physical strength, and ball trajectory, and the specialized ability such as sense, power hitter, average hitter, and spray hitter, is quantified depending on the above described predetermined game condition. Here, the quantified information of a player character are stored in the RAM 12 as a plurality of numeric value data.

The game sound quantifying means 54 includes a function of quantifying a variety of information for generating a supporter's music of a player character depending on a plurality of numeric values obtained by the game information quantifying means 53. In the game sound quantifying means 54, a variety of information for generating a supporter's music of a player character, specifically, preliminarily set information including music pattern, music pitch, rhythm, tempo, chord, cheer pattern, and the like, which are used for expressing a supporter's music image of "hardworking," "pure-minded," "mischievous," "cool-headed," "cool," "easygoing," "impatient," and "moody," are quantified depending on a plurality of numeric values obtained by the game information quantifying means 53. Here, the variety of quantified information for generating a supporter's music of a player character is stored in the RAM 12 as a plurality of numeric value data.

The game sound quantifying means 55 includes a function of creating a supporter's music of a player character depending on a plurality of numeric values obtained by the game information quantifying means 54. In the game sound generating means 55, a variety of quantified information for generating a supporter's music of a player character is read out of the RAM 12, and composition data with melody and/or rhythm, which is played by instruments such as a bugle and a drum, and audio data that includes a call such as "Hit it!" and "Go for it! Go for it!" are created, and thus a supporter's music for a player character is created. Here, the composition data and the audio data of the created supporter's music of a player character are stored in the RAM 12.

The event judging means 56 includes a function of judging whether a predetermined event is currently performed. In the event judging means 56, it is judged whether the batter character is in the batter box, which is an event that a supporter's music of a player character is required to be played thereby.

The game sound playing means 57 includes a function of playing a supporter's music of a player character, which is generated by the game sound generating means 55, when the batter character is judged to be in the batter box by the event judging means 56. In the game sound playing means 57, the composition data and the audio data of the supporter's music of a player character created by the game sound generating means 55 are read out of the RAM 12, and the supporter's music of a player character is externally outputted by the speaker 13 through the interface circuit 16, the D/A converter 15, and the amplified circuit 14, which make up the game sound output unit 4.

Here, information of a player character is quantified by the game information quantifying means 53 depending on a predetermined game condition, and a variety of information for generating a supporter's music of a player character is quantified by the game sound quantifying means 54 depending on the plurality of numeric values obtained by the game information quantifying means 53. Furthermore, a supporter's music of a player character is generated by the game sound generating means 55 depending on the plurality of numerical values obtained by the game sound quantifying means 54. Here, the created supporter's music for a player character is determined by the information of a player character in accordance with the predetermined game condition. Therefore, it is possible to create a supporter's music without game player's intension depending on development of a player character. Accordingly, it is possible to realize a baseball game with reality, which is more like the real-world baseball. Furthermore, here, it is possible to play a supporter's music without game player's intension depending on development of a player character when a predetermined event that the batter character is in the batter box is judged to be currently performed by the event judging means 56 and the game sound playing means 57.

### [Summary of supporter's music creation processing in baseball game]

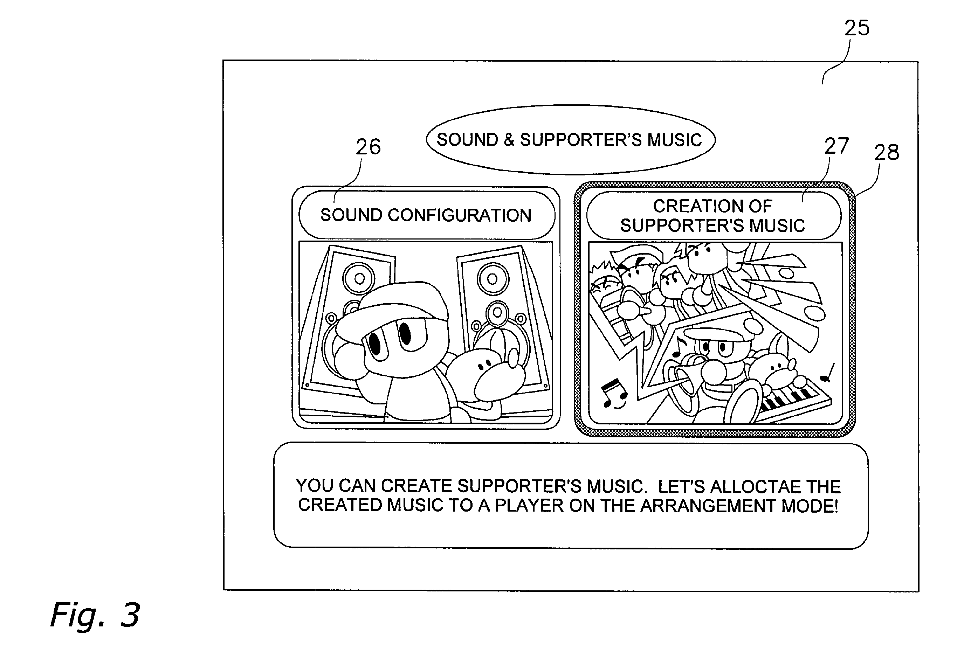

Next, the specific content of a supporter's music creation processing in a baseball game will be explained with reference to screen shots to be displayed on the television monitor 20, which are illustrated in Fig. 3 and subsequent figures.

In the present baseball game, when a game player creates a supporter's music, the game player presses the start button 17e of the controller 17, and then a sound setting supporter's music creation selection screen 25, which is illustrated in Fig. 3, is displayed on the television monitor 20. The sound setting supporter's music creation selection screen 25 includes a sound setting screen selection item 26 that is disposed on the left side, and a supporter's music creation screen selection item 27 that is disposed on the right side of the sound setting screen selection item 26.

Characters of "sound setting" and "supporter's music creation" are disposed on the upper portions within substantially rectangular shaped frames in the sounds setting screen selection item 26 and the supporter's music creation screen selection item 27, respectively, and different character diagrams are disposed on the lower portions within the substantially rectangular shaped frames thereof, respectively. A selection cursor 28 is disposed to surround the sound setting screen selection item 26 and the supporter's music creation screen selection item 27, and indicates that either the sound setting screen selection item 26 or the supporter's music creating screen selection item 27 is selected. The selection cursor 28 is disposed such that it is allowed to be moved right and left by manipulating the right key 17R and the left key 17L.

When the left key 17L and the right key 17R are manipulated, the selection cursor 28 is disposed to surround the sound setting screen selection item 26. When the second button 17b or the third button 17c is pressed in this condition, the present screen is changed to a sound setting screen (not illustrated in the figure). In the sound setting screen, it is possible to configure the following settings to be one of the volume modes of "large," "medium," and "small": a stereo setting for selecting stereo or mono, a surround setting for turning on/off surround sound, and a volume setting for setting the volume of live broadcast live, a P.A. announcer, an umpire, a supporter's music, cheers, and the like. A variety of settings are completed, and the selection cursor is moved to a selection item for determination (not illustrated in the figure) and the variety of settings are stored in the RAM 12. Thus, the present screen is returned to the sounds setting supporter's music creation selection screen 25.

When the left key 17L and the right key 17R are manipulated, the selection cursor 28 is disposed to surround the supporter's music creation selection item 27. When the second button 17b or the third button 17c is pressed in this condition, the present screen is moved to a supporter's music creation screen 30 illustrated in Fig. 8.

As illustrated in Fig. 8, the supporter's music creation screen 30 includes piano keys 31 that are disposed to extend on the left side in the up-and-down direction, note input fields 32 that are disposed on the right side of the piano keys 31 so as to be located in the same height positions as the pitches of the piano keys 31, a plurality of note characters 33 that are disposed in the pitch positions of the note input fields 32, respectively, an instrument pattern selection item 34 and a cheer pattern selection item 35 that are disposed one above the other below the note input fields 32, and a variety of mode setting selection items 36 that include a plurality of selection items disposed above the note input fields 32 in the right-and-left direction.

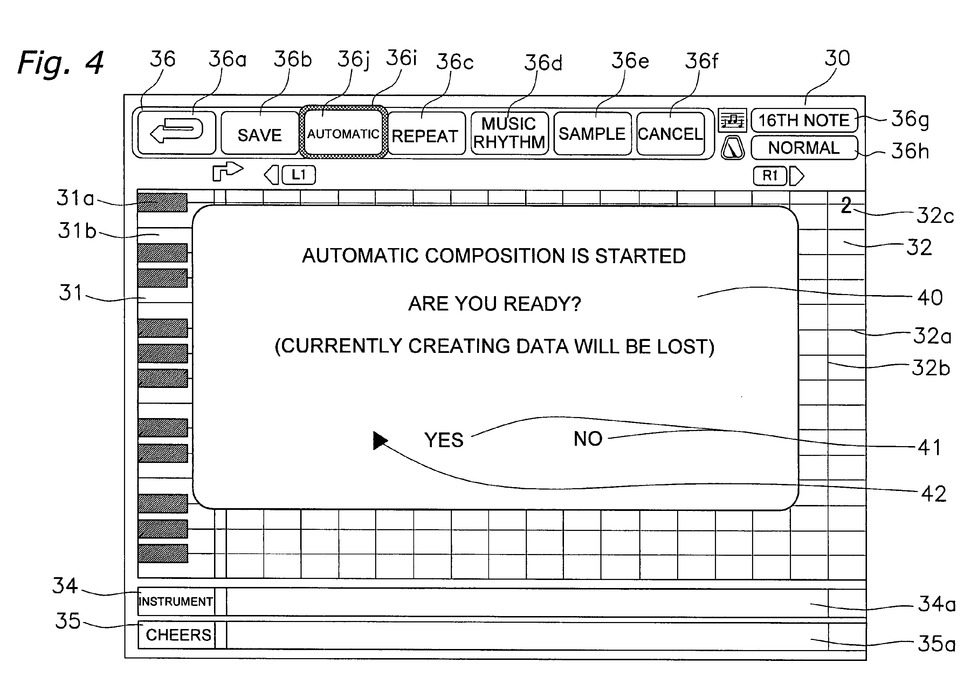

As illustrated in Fig. 8, various mode setting selection items 36 are disposed to be aligned from the left edge to in the rightward direction, and include a selection item 36a for returning to the previous screen, which is formed by a diagram of "return" symbol, a selection item 36b for saving, an automatic composition selection item 36j for moving to a composition starting screen 40 illustrated in Fig. 4, a selection item 36c for repetition, a music rhythm setting item 36d, a sample data selection setting item 36e, and a selection item 36f for cancellation. Furthermore, a rhythm setting display item 36g and a tempo setting display item 36h, which serve to display the present rhythm and tempo, are displayed to be aligned one above the other on the right side of the various mode setting selection items 36. As illustrated in Fig. 8, each of the selection items is selected by moving the selection cursor 36i that is disposed to surround each of the selection items to the automatic composition selection item 36j. Here, when the left key 17L and the right key 17R are manipulated, the selection cursor 36i is moved in the right-and-left direction. Then, when the selection cursor 36i is overlapped with the automatic composition selection item 36j and then the second button 17b or the third button 17c is pressed, each of the setting items is selected.

If a selection operation is performed while the selection cursor 36i is overlapped with the automatic composition selection item 36j in Fig. 8, the composition starting screen 40 illustrated in Fig. 4 is displayed. The automatic composition starting screen 40 includes a selection item 41 for determining, which is made up of "YES" and "NO" disposed to be aligned in the right-and-left direction, and a selection cursor 42 for selecting the selection item 41, which is disposed to surround the selection item 41.

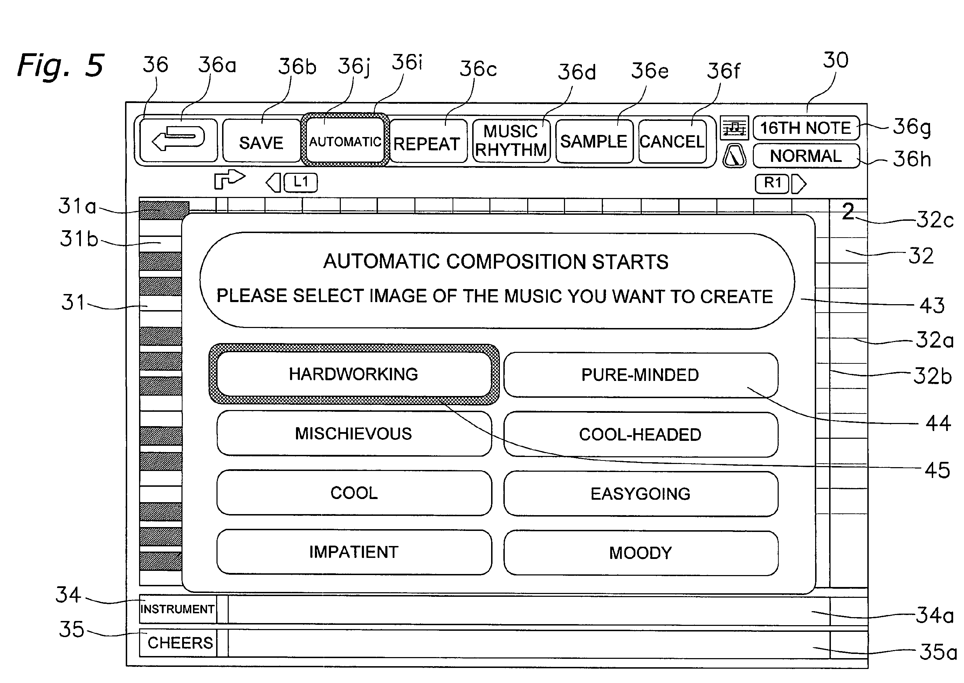

Here, when the left key 17L and the right key 17R are manipulated, the selection cursor 42 is moved in the right-and-left direction. Then, when the selection cursor 42 is overlapped with the selection item 41 of "YES" and then the second button 17b or the third button 17c is pressed, an automatic composition selection screen 42 illustrated in Fig. 5 is displayed. On the other hand, when the selection cursor 42 is overlapped with the selection item 41 of "NO" and then the second button 17b or the third button 17c is pressed, a supporter's music creation screen 30 illustrated in Fig. 8 is displayed.

The automatic composition selection screen 43 illustrated in Fig. 5 includes supporter's music image selection items 44 that are disposed to be aligned in two columns (right-and-left direction) and four rows (up-and-down direction) and are made up of "hardworking," "pure-minded," "mischievous," "cool-headed," "cool," "easygoing," "impatient," and "moody," and a selection cursor 45 for selecting one of the supporter's music image selection items 44, which is disposed to surround the supporter's music image selection item 44.

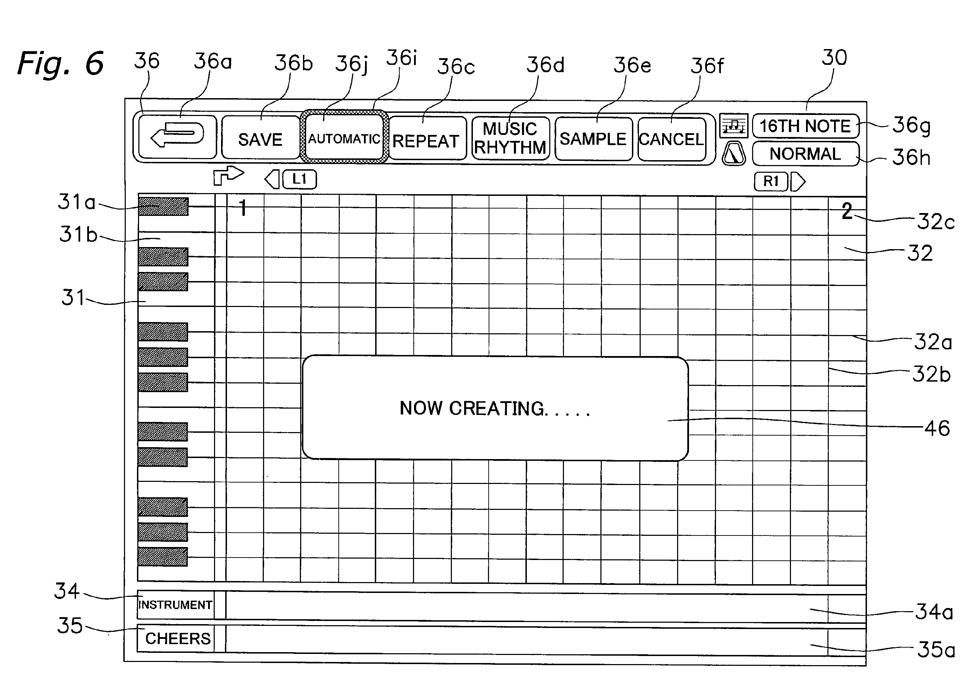

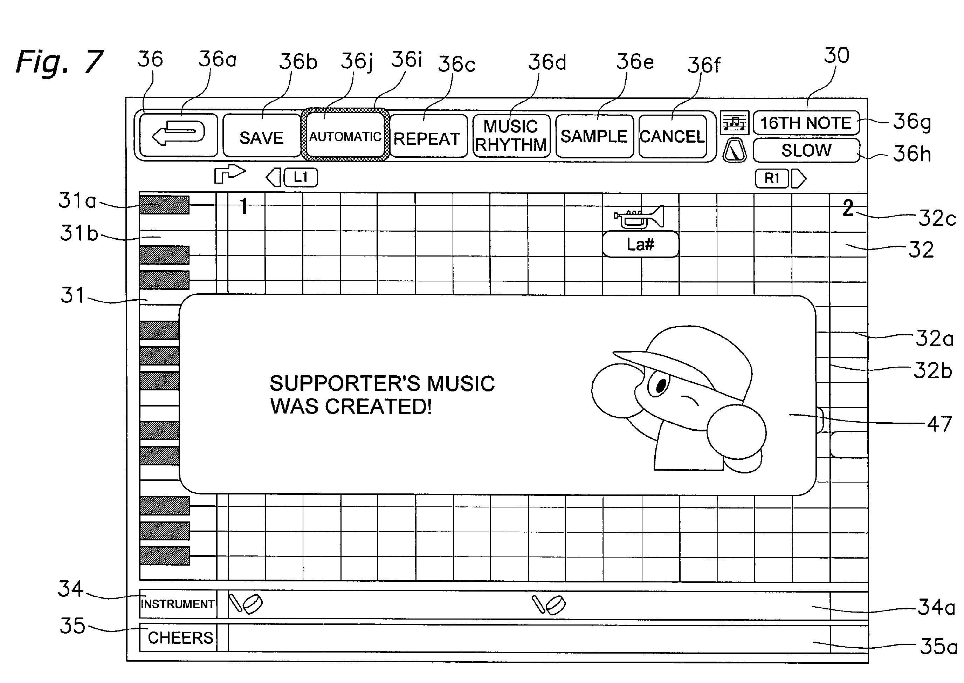

In Fig. 5, the selection cursor 45 is disposed to surround the supporter's music image selection item 44 of "hardworking," and thus the supporter's music image selection item 44 of "hardworking" is currently selected. When the second button 17b or the third button 17c is pressed in this condition, the supporter's music image selection item 44 of "hardworking" is selected, and creation of a supporter's music corresponding to "hardworking" is started. When creation of a supporter's music is started, a composition currently-creating screen 46 illustrated in Fig. 6 is displayed, and an animation is displayed that the number of dots "." increases at a predetermined time period in accordance with progress. When the creation of a supporter's music is completed, an automatic composition completing screen 47 illustrated in Fig. 7 is displayed, and the content that creation of a supporter's music is completed is displayed. Then, a supporter's music creation screen 30 is displayed while the music score of a supporter's music corresponding to "hardworking" illustrated in Fig. 8 is created therein.

Next, the piano key 31, the note input field 32, the note character 33 in the supporter's music creation screen 30 illustrated in Fig. 8 will be explained.

As illustrated in Fig. 8, the piano key 31 is made up of a graphic character just like a real piano key, and includes black keys 31a and white keys 31b, which are disposed in a predetermined pitch position to be aligned in the up-to-down direction. When the note character 33 with a pitch corresponding to the black key 31a and the white key 31b is selected (pitch position of Re# in Fig. 8), the piano keys 31 further include a selection key 31c (position of the black key corresponding to Re# in Fig. 8) with a color tone that is different from the normal color tone of the black key 31a and the white key 31b. With the selection key 31c, a game player is allowed to promptly see which note character 33 is selected by the game player.

As illustrated in Fig. 8, the note input fields 32 include pitch baselines 32a and sound length baselines 32b. The pitch baselines 32a are made up of horizontal lines disposed to be aligned one above the other, and the sound length baselines 32b are made up of vertical lines that are disposed to be aligned in the left-to-right direction so as to be perpendicular to the pitch baselines 32a. The pitch baselines 32a are formed to have an interval that is the same as the interval of the white key 31b of the piano keys 31, and are connected to the top and bottom lines of the white key 31b, respectively. The sound length baselines 32b are provided such that a line in every 4 lines is formed to have thickness that is different from that of others, and are further provided such that a line in every 16 lines is formed to have thickness and color tone that are different from those of others for delimiting a bar with the line in every 16 lines. The present and next bar numbers 32c are disposed in the upper left position and the upper right position of the note input fields 32 (4-bar and 5-bar in Fig. 8). The bar position is allowed to be moved by manipulating the L1 button 17L1 and R1 button 17R1 of the controller 17, respectively, and the present screen is accordingly moved to the screen of the previous bar and the screen of the next bar.

As illustrated in Fig. 8, the note character 33 is allowed to be disposed in an arbitrary position of the pitch baselines 32a and the sound length baselines 32b of the note input field 32. Here, pitch is set by the height position of the note character 33 in the up-to-down direction, and sound length is set by the length of the note character 33 in the horizontal direction. Melody (strain) is set by the combination of them. As illustrated in Fig. 8, the note character 33 includes a rectangular character 33a, a letter character 33b, a graphic character 33c, and a selection cursor 33d. The rectangular character 33a is formed in an approximately rectangular shape, and includes short sides with the length slightly shorter than the distance between adjacent pitch baselines 32a, and long sides with the length that is allowed to be changed. The letter character 33b is disposed in the approximately center part of the interior of the rectangular character 33a and shows the pitch. The graphic character 33c is disposed above the approximately center part of the rectangular character 33a and is formed by a graphic such as a bugle. The selection cursor 33d is provided in the four corners of the rectangular character 33a, and shows that the rectangular character 33a is currently selected.

The rectangular character 33a is an approximately rectangular shaped character with chamfered four-comers, and is allowed to be disposed in a height position corresponding to the pitch baseline 32a (i.e., position of the black key 31a) or is allowed to be disposed in position interposed between the adjacent pitch baselines 32a (i.e., position of the white key 31b). The pitch is accordingly set. In addition, the horizontal length of the rectangular character 33a is allowed to be arbitrary changed, and the sound length is accordingly set.

For the purpose of changing the horizontal length of this type of rectangular character 33a, the selection cursor 33d is moved to a position of the rectangular character 33a disposed in the pitch position of Re# by manipulating the up key 17U, the down key 17D, the left key 17L, and the right key 17R. Then, when the left key 17L and the right key 17R are manipulated while the second button 17b or the third button 17c is pressed, the right side position of the rectangular character 33a is allowed to be moved in the left-to-right direction (see Fig. 8). When the horizontal length of the rectangular character 33a is set to be a predetermined length by manipulating the left key 17L and the right key 17R while the second button 17b or the third button 17c is pressed, if the second button 17b or the third button 17c is released from being pressed, the horizontal length of the rectangular character 33a is fixed to the position. Here, the horizontal length of the rectangular character 33a is fixed by an operation of releasing the second button 17b or the third button 17c from being pressed. Therefore, manipulation by a game player is easier, compared to a case that the second button 17b or the third button 17c is pressed again.

On the other hand, for the purpose of changing the position of this type of rectangular character 33a in the up-to-down direction, the selection cursor 33d is moved to a position of the rectangular character 33a disposed in the pitch position of Re# by manipulating the up key 17U, the down key 17D, the left key 17L, and the right key 17R. Then, when the up key 17U or the down key 17D is manipulated while the second button 17b or the third button 17c is pressed, the rectangular character 33a is allowed to be moved in the up-to-down direction (see Fig. 8). When the height position of the rectangular character 33a in the up-to-down direction is disposed in a desired position by manipulating the up key 17U or the down key 17D while the second button 17b or the third button 17c is pressed, if the second button 17b or the third button 17c is released from being pressed, the height of the rectangular character 33a in the up-to-down direction is fixed to the position. Here, the height of the rectangular character 33a in the up-to-down direction is fixed by an operation of releasing the second button 17b or the third button 17c from being pressed. Therefore, manipulation by a game player becomes easier, compared to a case that the second button 17b or the third button 17c is pressed again.

Thus, it is possible to easily create a basic music having melody with a user interface easily controlled by a game player by disposing a plurality of rectangular characters 33a while the height in the up-to-down direction and/or the horizontal length of the rectangular characters 33a is/are changed.

The music thus created by a game player is allowed to be stored in the storage unit 2 as data that is named and is associated with a batter character by performing a selection operation by overlapping the selection cursor 36i with the selection item 36b for saving of the variety of mode setting selection item 36. Accordingly, when a batter character is in the batter box, the music created by a game player is automatically played. Also, the music created by a game player is allowed to be arbitrary loaded and reedited, deleted, or exchanged with the other game player by converting it into a password formed by a sequence of random Japanese hiragana characters.

Also, when a selection operation is performed in Fig 4 by overlapping the selection cursor 33d of the note character 33 with the instrument pattern display field 34a of the instrument pattern selection item 34, an instrument pattern selection screen (not illustrated in the figure) is displayed. The instrument pattern selection screen is a screen on which a drum's beat pattern without melody is allowed to be selected. The selected drum's beat pattern is displayed in the instrument pattern display field 34a as a graphic character that indicates drum's beat and a blank that indicates a rest.

Furthermore, when a selection operation is performed in Fig. 4 by overlapping the selection cursor 33d of the note character 33 with the cheer pattern display field 35a of the cheer pattern selection item 35, a cheer pattern selection screen (not illustrated in the figure) is displayed. The cheer pattern selection screen is a screen in which a cheer pattern such as "Hit it!," "Go get them! Go get them!," "Let's go! Let's go!," "Go, Go! Let's go!" is allowed to be selected. The selected cheer pattern is displayed in the cheer pattern display field 35a as a letter character such as "Hit it," "Go get them! Go get them!," "Let's go! Let's go!," "Go, Go! Let's go!."

Also, when the start button 17e is pressed in the supporter's music creation screen 30 illustrated in Fig. 8, audio of a drum and/or cheers is configured to be played while it is overlapped with the completed music. Also, a button manipulation instruction item 38 made up of a letter character of "START: PLAY" is displayed on the lower right part of the supporter's music creation screen 30. Here, a game player is allowed to easily perform a variety of manipulations only by following the instruction of the button manipulation instructing item 38.

As described above, a game player is allowed to compose a supporter's music suitable for one's preference by disposing the note character 33 in the above supporter's music creation screen 30. On the other hand, when a game player selects one of the supporter's music image selection items 44 displayed on the automatic composition selection screen 43, which are made up of "hardworking," "pure-minded," "mischievous," "cool-headed," "cool," "easygoing," "impatient," and "moody," a supporter's music of a player character is automatically created on the supporter's music creation screen 30 while the CPU 7 quantifies information of a player character such as player's power and striking power.

Next, a basic pattern of a supporter's music corresponding to the supporter's music image selection item 44 that is made up of "hardworking," "pure-minded," "mischievous," "cool-headed," "cool," "easygoing," "impatient," and "moody" will be explained.

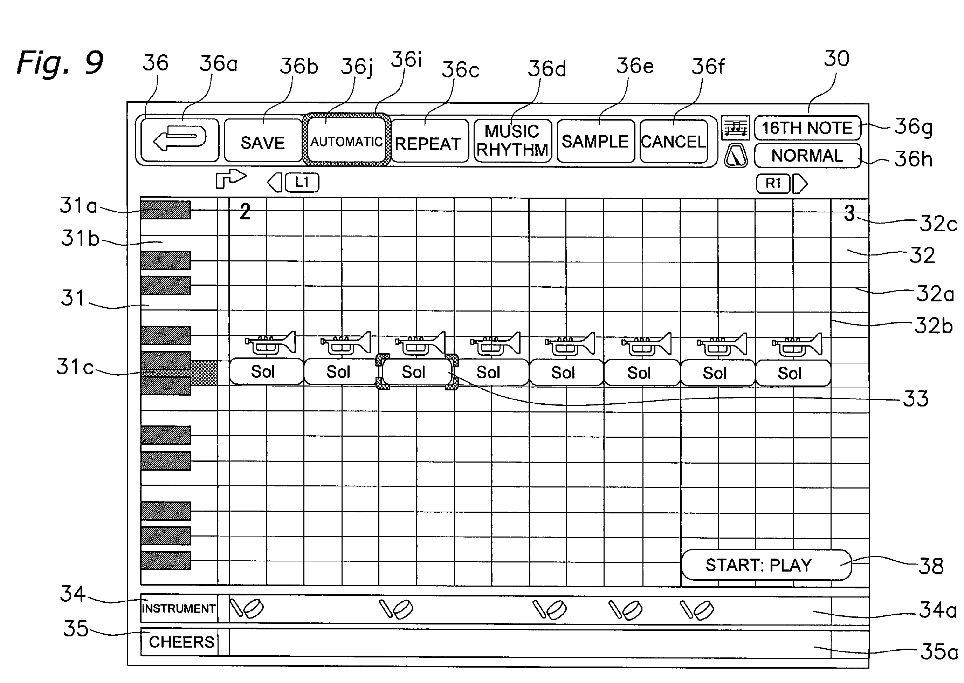

First, for the purpose of simplifying explanation, Fig. 9 illustrates the supporter's music creation screen 30 in which all the note characters 33 are disposed to be aligned in the same height position (pitch position of Sol). Here, all the note characters 33 are disposed to have length corresponding to two grids. In other words, the note characters 33 are disposed such that a bar includes 8 eighth notes.

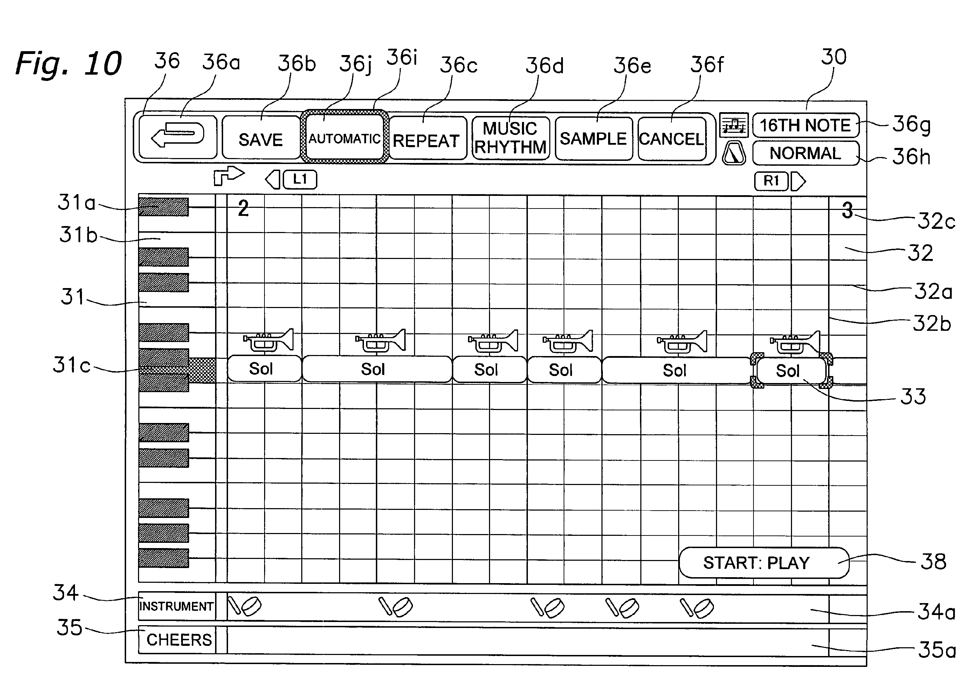

When a supporter's music image selection item 44 of "harworking" is selected on the automatic composition selection screen 43 illustrated in Fig. 5, a state of the note character 33 on the supporter's music creation screen 30 illustrated in Fig. 9 is converted into a state of the note character 33 on the supporter's music creation screen 30 illustrated in Fig. 10 (pattern of the supporter's music image illustrated in Fig, 10 is classified as a pattern E). On the supporter's music creation screen 30 illustrated in Fig. 10, a conversion that the note characters 33 positioned in the even-numbered beats are extended from the note character 33 positioned immediately before the note characters 33 positioned in the even-numbered beats and the present note character 33 of eighth note are added is performed at frequency corresponding to values of quantified information of a player character. Specifically, the note characters 33 positioned in the second and sixth beats, that is, the characters 33 positioned in the even-numbered beats, are configured to be extended from the note characters 33 positioned immediately before the note characters 33 positioned in the second and sixth beats and are configured to be changed to be quarter notes, and then the present note characters 33 of eighth note are configured to be added. Here, eighth notes and a tie that is formed by extending the note character 33 positioned in the even-numbered beat are extended from the note character 33 positioned immediately before the note character 33 positioned in the even-numbered beats, so called, a configuration that continuously sequential two notes in the same pitch are connected by an arched line and are played just like a note by connecting the two notes, are disposed to be aligned. Accordingly, it is possible to form rhythm with staccato-like beat.

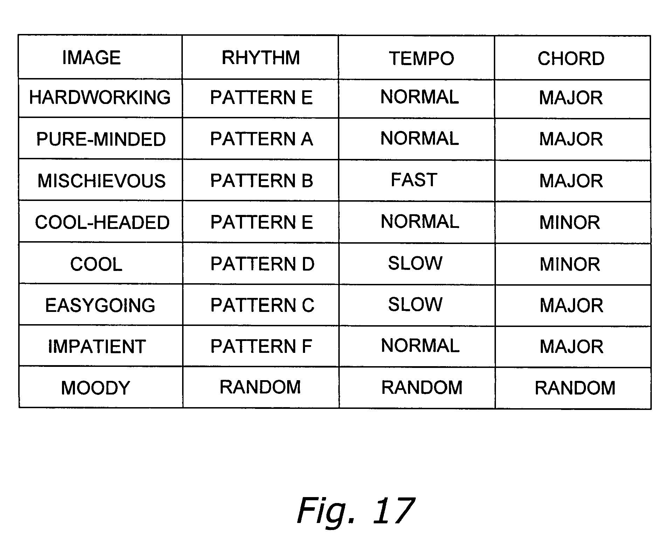

Thus, when the rhythm of "hardworking" (pattern E) is determined, the CPU 7 refers to a table that is preliminarily stored in the storage unit 2 and indicates correspondence relations among rhythm, tempo, and chord that correspond to a supporter's music image illustrated in Fig. 17, and determines tempo and chord. Here, a supporter's image is "hardworking" (pattern E). Accordingly, tempo is determined to be "normal," and the chord is determined to be "major chord." Then, based on baseball player's ability numeric values, which is obtained by quantifying information of a player character, specifically, information for indicating game character's specific ability and/or state, which includes, for example, the general ability such as baseball player's power, striking power, pitching strength, defensive skill, running ability, error avoidance ability, physical strength, and ball trajectory, and the specialized ability such as sense, power hitter, average hitter, and spray hitter, the height position of the note character 33 is determined and melody of a supporter's music is created.

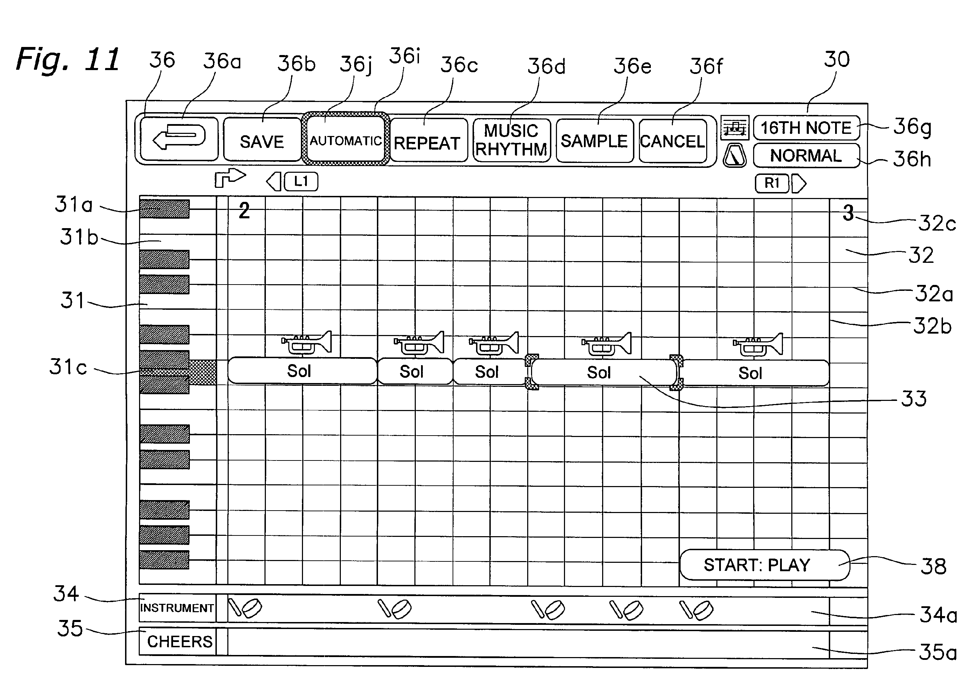

When the supporter's music image selecting item 44 of "pure-minded" is selected on the automatic composition selecting screen 43 illustrated in Fig. 5, a state of the note character 33 on the supporter's music creation screen 30 illustrated in Fig. 9 is converted into a state of the note character 33 on the supporter's music creation screen 30 illustrated in Fig. 11 (pattern of a supporter's music image illustrated in Fig. 11 is classified as a pattern A). On the supporter's music creation screen 30 illustrated in Fig. 11, a processing for converting the note characters 33, which are positioned in the first to fourth beats within the second bar, into quarter notes is performed at frequency corresponding to values of quantified information of a player character. Specifically, the note characters 33 positioned in the first and fourth beats, which are included within the first to fourth beats in the second bar, are configured to be converted into quarter notes. Here, the note characters 33 positioned in the former portion of each of the second to eighth bars, which correspond to the main part of a bar, are converted into quarter notes. Accordingly, it is possible to form a generally common rhythm.

When rhythm is thus determined to be "pure-minded" (pattern A), the CPU 7 refers to a table that is preliminarily stored in the storage unit 2 and indicates correspondence relations among rhythm, tempo, and chord that correspond to the supporter's music image illustrated in Fig. 17, and determines tempo and chord. Here, image of the supporter's music is "pure-minded" (pattern A). Accordingly, tempo is determined to be "normal," and chord is determined to be "major chord." Then, based on baseball player's ability numeric values, which is obtained by quantifying information of a player character, specifically, information for indicating game character's specific ability and/or state, which includes, for example, the general ability such as baseball player's power, striking power, pitching strength, defensive skill, running ability, error avoidance ability, physical strength, and ball trajectory, and the specialized ability such as sense, power hitter, average hitter, and spray hitter, the height position of the note character 33 is determined and melody of a supporter's music is created.

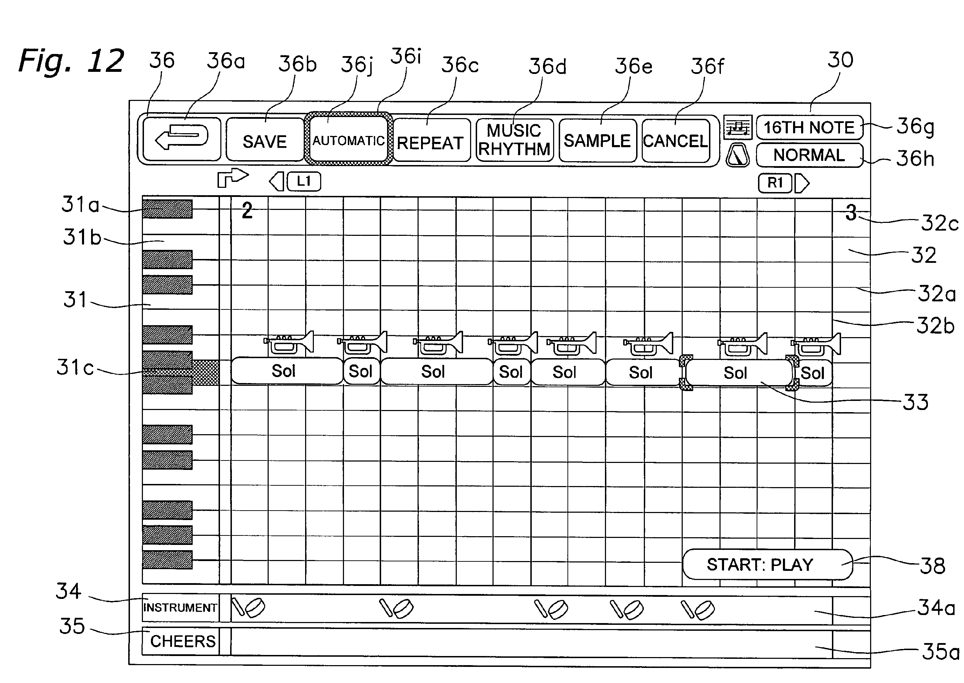

When the supporter's music image selection item 44 of "mischievous" is selected on the automatic composition selection screen 43 illustrated in Fig. 5, a state of the note character 33 on the supporter's music creation screen 30 illustrated in Fig. 9 is converted into a state of the note character 33 on the supporter's music creation screen 30 illustrated in Fig. 12 (pattern of a supporter's music image illustrated in Fig. 12 is classified as a pattern B). On the supporter's music creation screen 30 illustrated in Fig. 12, a processing for converting the note characters 33 positioned in the first to fourth beats within the second to eighth bars into dotted eighth notes and converting the eighth notes disposed immediately after the converted note characters 33 into sixteenth notes is performed at frequency corresponding to values of quantified information of a player character. Specifically, the note characters 33 positioned in the first and second beats, which are included in the first to fourth beats in the second bar, are configured to be converted into dotted eighth notes (corresponding to three grids) and the note characters 33 positioned thereafter are configured to be converted into sixteenth notes (corresponding to one grid). Here, the note characters 33 positioned in the former portion of each of the second to eighth bars, which is the main portion of a bar, are converted into a sequence of dotted eighth notes and sixteenth notes. Therefore, it is possible to form rhythm with vigorous impression.

Thus, when the rhythm of the "mischievous" (pattern B) is determined, the CPU 7 refers to a table that is preliminarily stored in the storage unit 2 and indicates correspondence relations among rhythm, tempo, and chord that correspond to the supporter's music image illustrated in Fig. 17, and determines tempo and chord. Here, a supporter's music image is "mischievous" (pattern B). Accordingly, tempo is determined to be "fast," and the chord is determined to be "major chord." Then, based on baseball player's ability numeric values, which is obtained by quantifying information of a player character, specifically, information for indicating game character's specific ability and/or state, which includes, for example, the general ability such as baseball player's power, striking power, pitching strength, defensive skill, running ability, error avoidance ability, physical strength, and ball trajectory, and the specialized ability such as sense, power hitter, average hitter, and spray hitter, the height position of the note character 33 is determined and melody of a supporter's music is created.

When the supporter's music image selection item 44 of "cool-headed" is selected on the automatic composition selection screen 43 illustrated in Fig. 5, a state of the note character 33 on the supporter's music creation screen 30 illustrated in Fig. 9 is converted into a state of the note character 33 on the supporter's music creation screen 30 illustrated in Fig. 10 (pattern of a supporter's music image illustrated in Fig. 10 is classified as a pattern E). On the supporter's music creation screen 30 illustrated in Fig. 10, a conversion that the note characters 33 positioned in the even-numbered beats are extended from the note character 33 positioned immediately before the note characters 33 positioned in the even-numbered beats and the present note character 33 of eighth note are added is performed at frequency corresponding to values of quantified information of a player character. Specifically, the note characters 33 positioned in the second and sixth beats, that is, the characters 33 positioned in the even-numbered beat, are configured to be extended from the note characters 33 positioned immediately before the note characters 33 positioned in the second and sixth beats and are configured to be changed to be quarter notes, and then the present note characters 33 of eighth note are configured to be added. Here, eighth notes and a tie that is formed by extending the note character 33 positioned in the even-numbered beat are extended from the note character 33 positioned immediately before the note character 33 positioned in the even-numbered beat, so called, a configuration that continuously sequential two notes in the same pitch are connected by an arched line and are played just like a note by connecting the two notes, are disposed to be aligned. Accordingly, it is possible to form rhythm with staccato-like beat.

Thus, when the rhythm of the "cool-headed" (pattern E) is determined, the CPU 7 refers to a table that is preliminarily stored in the storage unit 2 and indicates correspondence relations among rhythm, tempo, and chord that correspond to the supporter's music image illustrated in Fig. 17, and determines tempo and chord. Here, the supporter's image is "cool-headed" (pattern E). Accordingly, tempo is determined to be "normal," and the chord is determined to be "minor chord." Then, based on baseball player's ability numeric values, which is obtained by quantifying information of a player character, specifically, information for indicating game character's specific ability and/or state, which includes, for example, the general ability such as baseball player's power, striking power, pitching strength, defensive skill, running ability, error avoidance ability, physical strength, and ball trajectory, and the specialized ability such as sense, power hitter, average hitter, and spray hitter, the height position of the note character 33 is determined and melody of a supporter's music is created. Note that "hardworking" (pattern E) and "cool-headed" (pattern E) have the same rhythm and tempo, but have "major chord" and "minor chord," respectively, and thus their chords are different from each other. Accordingly, a supporter's music with relatively bright impression is formed for "hardworking" (pattern E), and a supporter's music with relatively calm impression is formed for "cool-headed" (pattern E).

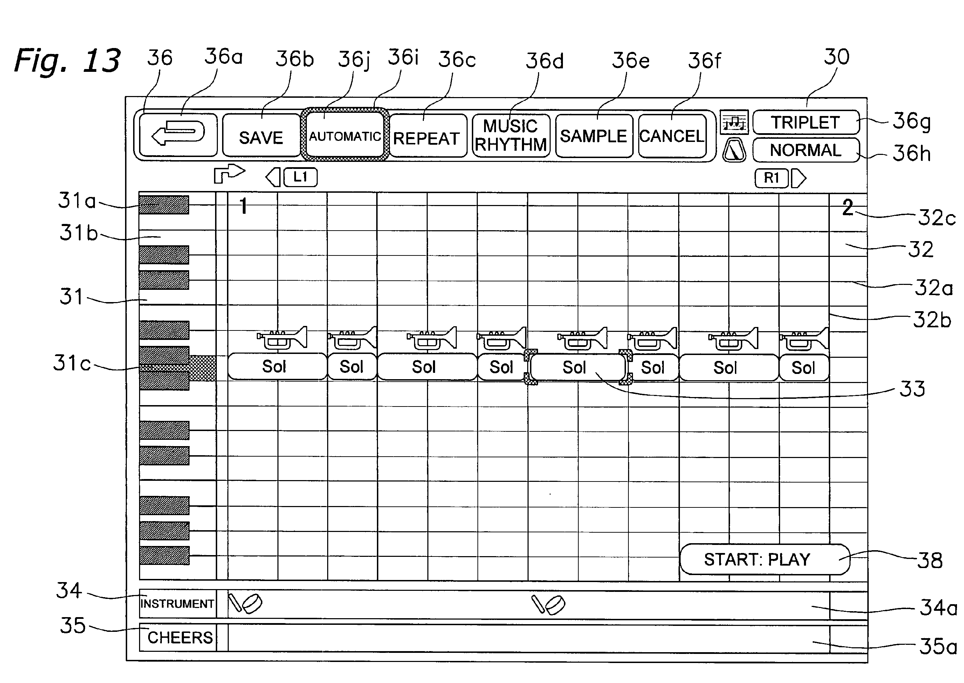

When the supporter's music image selection item 44 of "cool" is selected on the automatic composition selection screen 43 illustrated in Fig. 5, a state of the note character 33 on the supporter's music creation screen 30 illustrated in Fig. 9 is converted into a state of the note character 33 on the supporter's music creation screen 30 illustrated in Fig. 13 (pattern of a supporter's music image illustrated in Fig. 13 is classified as a pattern D). On the supporter's music creation screen 30 illustrated in Fig. 13, depending on values of quantified information of a player character, a processing is performed that all the note character 33 are converted into the note characters 33 of triplet per a beat and the rest of the note characters 33 are discarded. Specifically, when the note character 33 is an eighth note, a conversion is configured to be performed that the note character 33 is converted into a triplet quarter note (corresponds to two grids) and a triplet eighth note (corresponds to one grid) is added after the triplet quarter note. In addition, when the note character 33 is a quarter note, a conversion is configured to be performed that the note character 33 is converted into a triplet dotted quarter note (corresponds to three grids) and a triplet eighth note (corresponds to one grid) is added after the triplet dotted quarter note. Here, it is possible to form smoothly continuous rhythm by converting the note character 33 into the note character 33 of triplet.

Thus, when the rhythm of the "cool" (pattern D) is determined, the CPU 7 refers to a table that is preliminarily stored in the storage unit 2 and indicates correspondence relations among rhythm, tempo, and chord that correspond to the supporter's music image illustrated in Fig. 17, and determines tempo and chord. Here, image of the supporter's music is "cool" (pattern D). Accordingly, tempo is determined to be "slow," and chord is determined to be "minor chord." Then, based on baseball player's ability numeric values, which is obtained by quantifying information of a player character, specifically, information for indicating game character's specific ability and/or state, which includes, for example, the general ability such as baseball player's power, striking power, pitching strength, defensive skill, running ability, error avoidance ability, physical strength, and ball trajectory, and the specialized ability such as sense, power hitter, average hitter, and spray hitter, the height position of the note character 33 is determined and melody of a supporter's music is created.

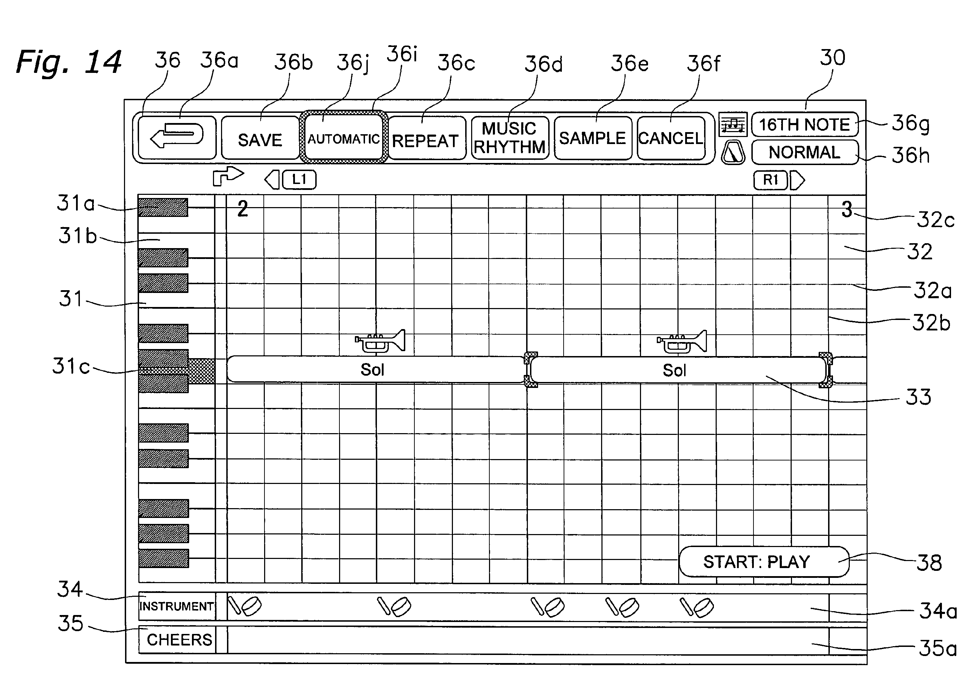

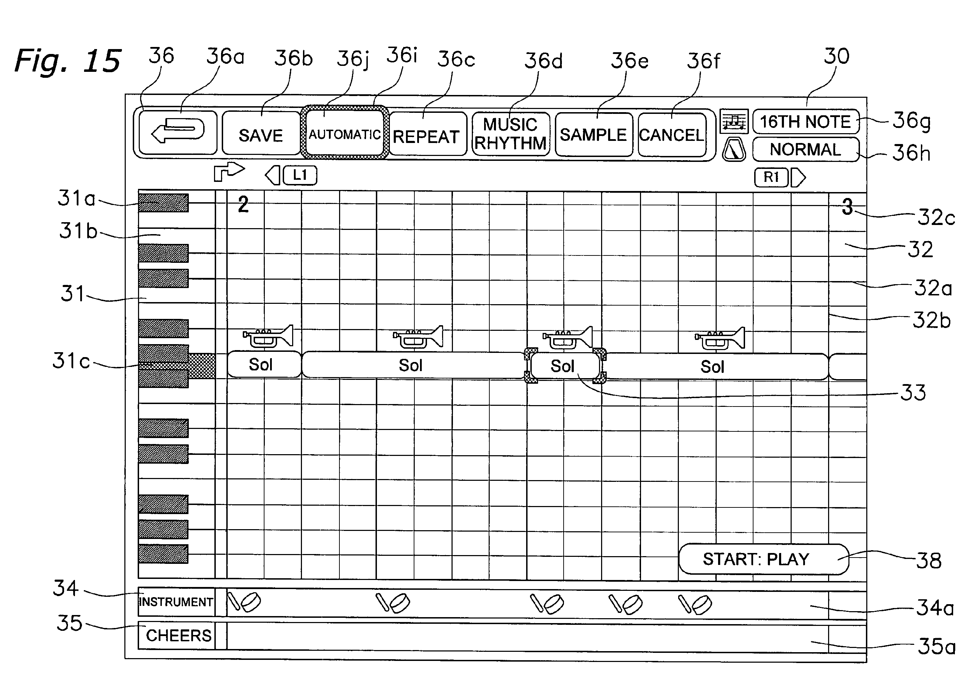

When the supporter's music image selection item 44 of "easygoing" is selected on the automatic composition selection screen 43 illustrated in Fig. 5, a state of the note character 33 on the supporter's music creation screen 30 illustrated in Fig. 9 is converted into states of the note character 33 on the supporter's music creation screen 30 illustrated in Figs. 14 and 15 (patterns of supporter's music images illustrated in Figs. 14 and 15 are classified as a pattern C). On the supporter's music creation screen 30 illustrated in Fig. 14, a processing for converting the note characters 33 into a half note at frequency corresponding to values of quantified information of a player character. On the other hand, on the supporter's music creation screen 30 illustrated in Fig. 15, a processing is performed that the note character 33 is converted into an eighth note and a dotted quarter note is added after the eighth note at frequency corresponding to quantified information of a player character. Either processing in Figs. 14 or processing in Fig. 15 is performed at probability of 50%. Specifically, in Fig. 14, all the note characters 33 are converted into half notes (correspond to eight grids). In Fig. 15, the previous note character 33 is converted into an eighth note (corresponds to two grids) and the note character 33 positioned after the eighth note is converted into a dotted quarter note (corresponds to six grids). Here, length of each of the note characters 33 is configured to be long. Accordingly, it is possible to form a relatively slow rhythm.

Thus, when the rhythm of the "easygoing" (pattern C) is determined, the CPU 7 refers to a table that is preliminarily stored in the storage unit 2 and indicates correspondence relations among rhythm, tempo, and chord that correspond to the supporter's music image illustrated in Fig. 17, and determines tempo and chord. Here, image of the supporter's music is "easygoing" (pattern C). Accordingly, tempo is determined to be "slow," and chord is determined to be "major chord." Then, based on baseball player's ability numeric values, which is obtained by quantifying information of a player character, specifically, information for indicating game character's specific ability and/or state, which includes, for example, the general ability such as baseball player's power, striking power, pitching strength, defensive skill, running ability, error avoidance ability, physical strength, and ball trajectory, and the specialized ability such as sense, power hitter, average hitter, and spray hitter, the height position of the note character 33 is determined and melody of a supporter's music is created.

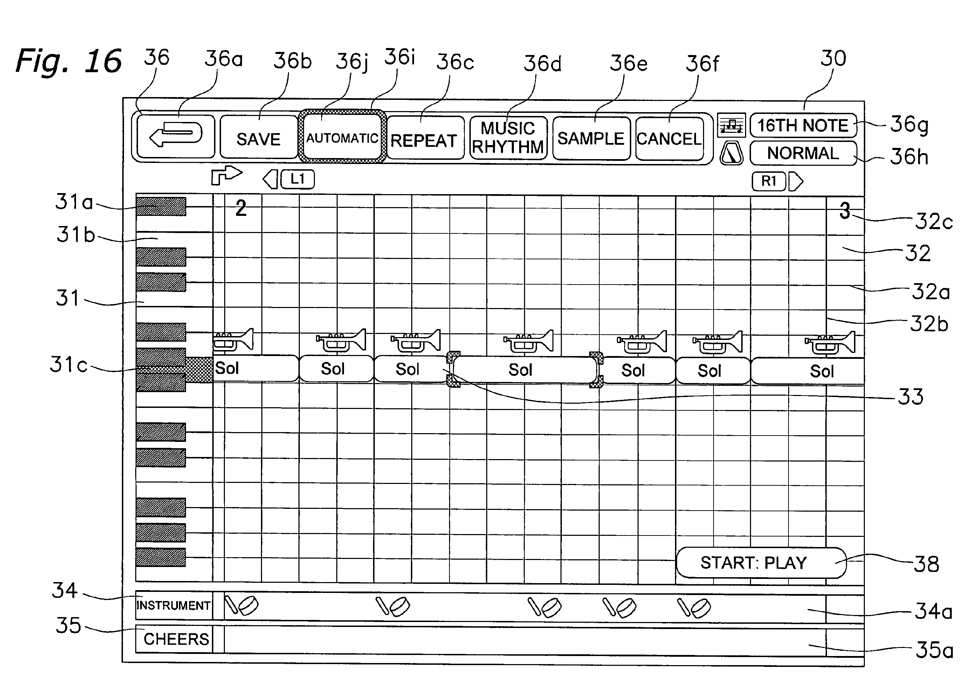

When the supporter's music image selecting item 44 of "impatient" is selected on the automatic composition selection screen 43 illustrated in Fig. 5, a state of the note character 33 on the supporter's music creation screen 30 illustrated in Fig. 9 is converted into a state of the note character 33 on the supporter's music creation screen 30 illustrated in Fig. 16 (pattern of a supporter's music image illustrated in Fig. 16 is classified as a pattern F). On the supporter's music creation screen 30 illustrated in Fig. 16, a conversion is performed that the note characters 33 positioned in the odd-numbered beats are extended from the note characters 33 positioned immediately before the note characters 33 positioned in the odd-numbered beats and then the present note characters 33 of eighth note are added. Specifically, the note character 33 positioned in the third beat, that is, the note character 33 positioned in the odd-numbered beat, is configured to be extended from the note character 33 positioned immediately before the note character 33 positioned in the third beat and is configured to be changed to be a quarter note, and then the present note character 33 of eighth note is configured to be added. Here, an eighth note and a tie that is formed by extending the note character 33 positioned in the odd-numbered beat from the note character 33 positioned immediately before the note character 33 positioned in the odd-numbered beat, so called, a configuration that continuously sequential two notes in the same pitch are connected by an arched line and are played just like a note by connecting the two notes, are disposed to be aligned. Accordingly, it is possible to form rhythm with a staccato-like beat.

Thus, when the rhythm of the "impatient" (pattern F) is determined, the CPU 7 refers to a table that is preliminarily stored in the storage unit 2 and indicates correspondence relations among rhythm, tempo, and chord that correspond to the supporter's music image illustrated in Fig. 17, and determines tempo and chord. Here, image of the supporter's music is "impatient" (pattern F). Accordingly, tempo is determined to be "normal," and chord is determined to be "major chord." Then, based on baseball player's ability numeric values, which is obtained by quantifying information of a player character, specifically, information for indicating game character's specific ability and/or state, which includes, for example, the general ability such as baseball player's power, striking power, pitching strength, defensive skill, running ability, error avoidance ability, physical strength, and ball trajectory, and the specialized ability such as sense, power hitter, average hitter, and spray hitter, the height position of the note character 33 is determined and melody of a supporter's music is created.

When the supporter's music image selecting item 44 of "moody" is selected on the automatic composition selection screen 43 illustrated in Fig. 5, the pattern of the supporter's music image is randomly set to be one of the patterns A to F based on arithmetic operation with random numbers. In addition, not only rhythm of the supporter's music but also tempo is randomly set to be one of the tempos of "fast," "normal," and "slow" based on the arithmetic operation with random numbers. Furthermore, chord is also randomly set to be one of the chords of "major chord" and "minor chord" based on the arithmetic operation with random numbers. Then, based on baseball player's ability numeric values, which is obtained by quantifying information of a player character, specifically, information for indicating game character's specific ability and/or state, which includes, for example, the general ability such as baseball player's power, striking power, pitching strength, defensive skill, running ability, error avoidance ability, physical strength, and ball trajectory, and the specialized ability such as sense, power hitter, average hitter, and spray hitter, the height position of the note character 33 is determined and melody of a supporter's music is created. Here, even when a game player does not like a supporter's music composed by the CPU 7, the pattern, the tempo, the chord of the supporter's music image is randomly set in composing the supporter's music again. Accordingly, a supporter's music with different impression tends to be generated.

In this type of supporter's music creation processing, the height position of the note character 33 is determined and melody of the supporter's music is created based on the player's ability numeric value that is obtained by quantifying information of a player character. Therefore, it is possible to create a supporter's music without player's intension depending on development of a player character. Consequently, it is possible to realize a baseball game with reality that is more like the real-world baseball.

### [Processing flow in performing supporter's music creation processing in baseball game]

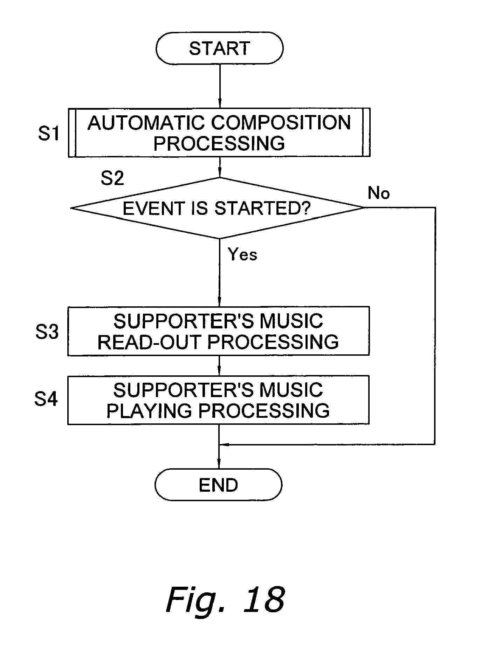

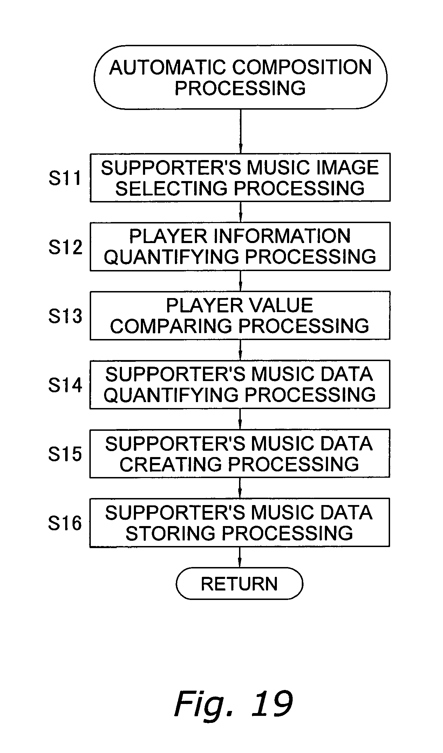

The supporter's music creation processing in the baseball game of the present embodiment will be explained with reference to flowcharts illustrated in Figs. 18 and 19.

First, in the sound setting supporter's music creation selection screen 25 illustrated in Fig. 3, when the left key 17L and the right key 17R are manipulated, the selection cursor 28 is disposed to surround the supporter's music creating screen selection item 27. When the second button 17b or the third button 17c is pressed in this condition, the present screen is moved to the supporter's music creation screen 30 illustrated in Fig. 8, and a supporter's music creation processing illustrated in Fig. 18 is started.

In the supporter's music creation processing illustrated in Fig. 18, when a selection operation is performed in the supporter's music creation screen 30 illustrated in Fig. 8 by overlapping the selection cursor 36i with the automatic composition selection item 36j, the automatic composition starting screen 40 illustrated in Fig. 4 is displayed. On the automatic composition starting screen 40, when the left key 17L and the right key 17R are manipulated, the selection cursor 42 is moved in the right-and-left direction. If the selection cursor 42 is overlapped with the selection item 41 of "YES" and the second button 17b or the third button 17c is pressed, an automatic composition processing is performed (S1). Note that here, when the selection cursor 42 is overlapped with the selection item 41 of "YES" and then the second button 17b or the third button 17c is pressed, the present mode is moved to the automatic composition mode, in other words, a predetermined game condition is currently satisfied.

As illustrated in Fig. 19, the automatic composition processing of Step S1 is started while the automatic composition selection screen 43 illustrated in Fig. 5 is displayed. On the automatic composition selection screen 43, when the selection cursor 45 is overlapped with one of the supporter's music image selection items 44, which are made up of "hardworking," "pure-minded," "mischievous," "cool-headed," "cool," "easygoing," "impatient," and "moody," and are displayed to be aligned in two columns (right-to-left direction) and four lows (up-to-down direction), for instance, when the selection cursor 45 is overlapped with the supporter's music image selection item 44 of "hardworking" and the second button 17b or the third button 17c is pressed, a supporter's music image selection processing for determining the supporter's music image of "hardworking" is performed (S11).

In the supporter's music image selection processing of Step S11, a table illustrated in Fig. 17, which indicates correspondence relationship among rhythm, tempo, and chord that correspond to supporter's music images, is referred to, and the rhythm, the tempo, and the chord that correspond to the supporter's music image of "hardworking" are set to be "pattern E", "normal," and "major chord," respectively. When the supporter's music image selection processing is performed, a player information quantifying processing for quantifying information of a player character depending on a predetermined game condition is performed (S12).

In the player information quantifying processing of Step S12, a player numeric value is set to be integer number of 1-15, for instance, in response to information of a player character, specifically, information for indicating game character's specific ability and/or state, which includes, for example, the general ability such as baseball player's power, striking power, pitching strength, defensive skill, running ability, error avoidance ability, physical strength, and ball trajectory, and the specialized ability such as sense, power hitter, average hitter, and spray hitter. When the player information quantifying processing is performed in Step S12, a player's numeric value comparing processing for comparing player's numeric values is performed (S13). In the player's numeric value comparing processing of Step S13, player's numeric values obtained in the player information quantifying processing of Step S12 are compared. For example, magnitudes of player's numeric values are compared. Specifically, comparative data, which indicates that the player's numeric values are ordered in the order of striking power, running ability, et al., is stored.

Next, based on the player's numeric value obtained in the player information quantifying processing of Step S12 and the comparative data obtained in the player's numeric value comparing processing of Step S13, a supporter's music data quantifying processing for quantifying a variety of information to be used for generating a supporter's music of a player character is performed (S14). In the supporter's music data quantifying processing of Step S14, based on the player's numeric value obtained in the player information quantifying processing of Step S12 and the comparative data obtained in the player's numeric value comparing processing of Step S13, specifically, a supporter's music data numeric value for creating a supporter's music, for instance, with "melody suitable for a player character having properties of the first or second batter" is created depending on the player's numeric value set to be the integer number of 1-15 and the comparative data that player's numeric values are ordered in the order of striking power, running ability, and et al. For example, the "melody suitable for a player character having properties of the first or second batter" is a supporter's music with dashing image, which has a short introduction and rhythm of staccato-like beat. Here, the sort of cheers is set to be "Go!" Go! Let's go!," for instance.

When the supporter's music data quantifying processing of Step S14 is performed, a supporter's music data creating processing for creating a supporter's music of a player character is performed based on the supporter's music data numeric value for creating a supporter's music (S15). In the supporter's music data creating processing of Step S 15, the supporter's music data of "pattern E," "normal," "major chord," and "melody suitable for a player character having properties of the first or second batter" is created based on the rhythm, the tempo, and the chord that are selected in the supporter's music image selecting processing of Step S11 and the supporter's music data numeric value that is determined in the supporter's music data qualifying processing of Step S14. The supporter's music data created in the supporter's music data creating processing of Step S15 is stored in the storage unit 2 by a supporter's music data storing processing (S16), and the present processing returns to the supporter's music creating processing illustrated in Fig. 18.

When the supporter's music for a player character is generated in Step S1, it is judged whether a predetermined event is started (S2). Here, it is judged whether a predetermined batter character is in the batter box, which is an event for which the supporter's music of a player character is required to be played. If the predetermined batter character is in the batter box, a supporter's music reading-out processing is performed (S3). If the predetermined batter character is not in the batter box, the supporter's music creating processing is terminated.

In the supporter's music reading-out processing of Step 3, the supporter's music created in the automatic composition processing of Step S1 is read out of the storage unit 2. Specifically, the supporter's music data with "pattern E," "normal," "major chord," and "melody suitable for a player character having properties of the first or second batter," which is created in the supporter's music data creating processing of Step S15 illustrated in Fig. 19, is read out. Then, the supporter's music will be played by a supporter's music playing processing illustrated in Fig. 18 (S4). In the supporter's music playing processing of Step S4, the supporter's music of a player character, that is, the supporter's music with "pattern E," "normal," "major chord," and "melody suitable for a player character having properties of the first or second batter" is externally outputted from the speaker 13 through the interface circuit 16, the D/A converter 15, and the amplifier circuit 14, which make up the game sound output unit 4.

Here, in the automatic composition processing of Step S1, information of a player character is quantified by the player information quantifying processing of Step S12 depending on a predetermined game condition, and a variety of information for generating a supporter's music of a player character is quantified by the supporter's music data quantifying processing of Step S14 depending on the plurality of numeric values obtained by the player information quantifying processing of Step S12 and the like. Furthermore, a supporter's music of a player character is generated by the supporter's music data creating processing of Step S 15 depending on the plurality of numeric values obtained by the supporter's music data quantifying processing of Step S 14. Here, the created supporter's music of a player character is determined by the CPU 7 based on information of a player character in accordance with a predetermined game condition. Therefore, it is possible to create a supporter's music without game player's intension depending on development of a player character. Consequently, it is possible to realize a baseball game with reality, which is more like the real-world baseball.

### [Other Embodiments]

(a) In the above described embodiment, a case is described that the home video game device is used as an example of a computer to which the game program is allowed to be applied. However, the game device is not limited to the above described embodiment, and may be applied to a game device with which a monitor is separately provided, a monitor-integrated game device, a personal computer that functions as a game device when a game program is executed therein, a portable game device, a mobile phone, a PDA, an arcade game device, or the like, as well.

(b) The present invention includes a program for executing the above described game and a computer-readable recording medium that this program is recorded therein. For example, a computer-readable flexible disk, a semiconductor memory, a CD-ROM, a DVD, BD-ROM (Blu-ray Disk-ROM), a UMD, a ROM cassette, and the like may be suggested as the recording medium other than the cartridge.

(c) In the above described embodiment, a baseball game is exemplified as a game that is executed in the game console. However, the game to be executed therein is not limited to this, and a variety of games may be applied. For example, it may be applied to a variety of sports games such as soccer and martial arts, a simulation game, a shooting game, a role-playing game and the like, as well.

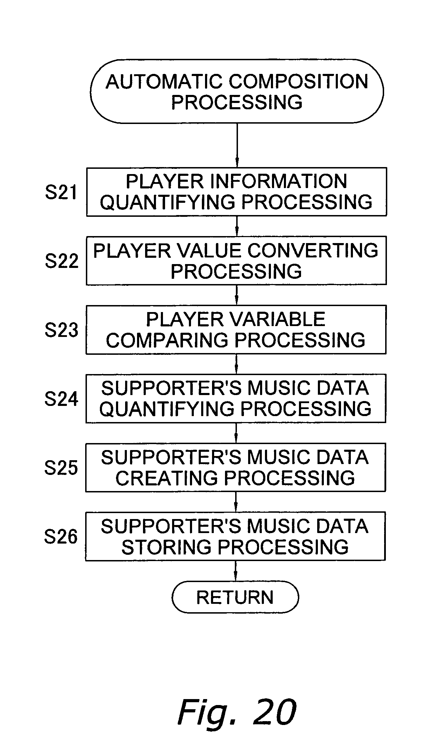

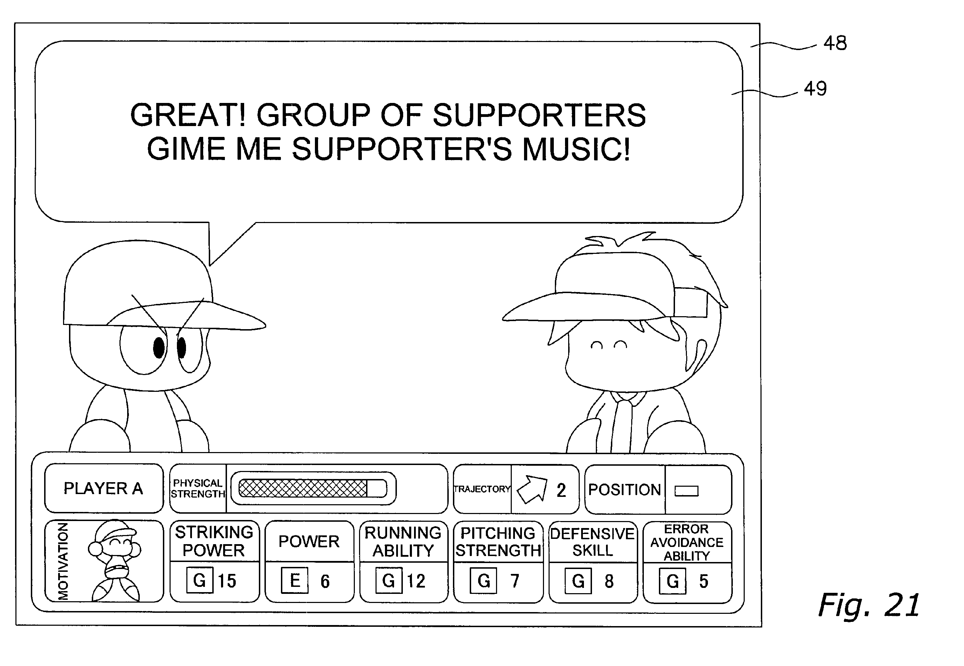

(d) In the above described embodiment, the supporter's music image selecting processing of Step S11 illustrated in Fig. 19 is performed in the automatic composition processing. However, as illustrated in Fig. 20, a supporter's music may be configured to be created only by the CPU 7 based on information of a player character in accordance with a predetermined game condition without performing a processing of selecting a supporter's music by a game player. Here, when it is judged that a predetermined condition is satisfied, for example, when it is judged that the number of games, the number of victory and defeat, popularity of a player, result, and the like, which are included in the predetermined game condition, are greater than or equal to a predetermined value, an even that a group of supporters creates a supporter's music occurs. Then, a dialogue "Great! A group of supporters created a supporter's music for me!" may be displayed in the player's dialogue display item 49 for showing a dialogue of a player character on the player development display screen 48 illustrated in Fig. 21.

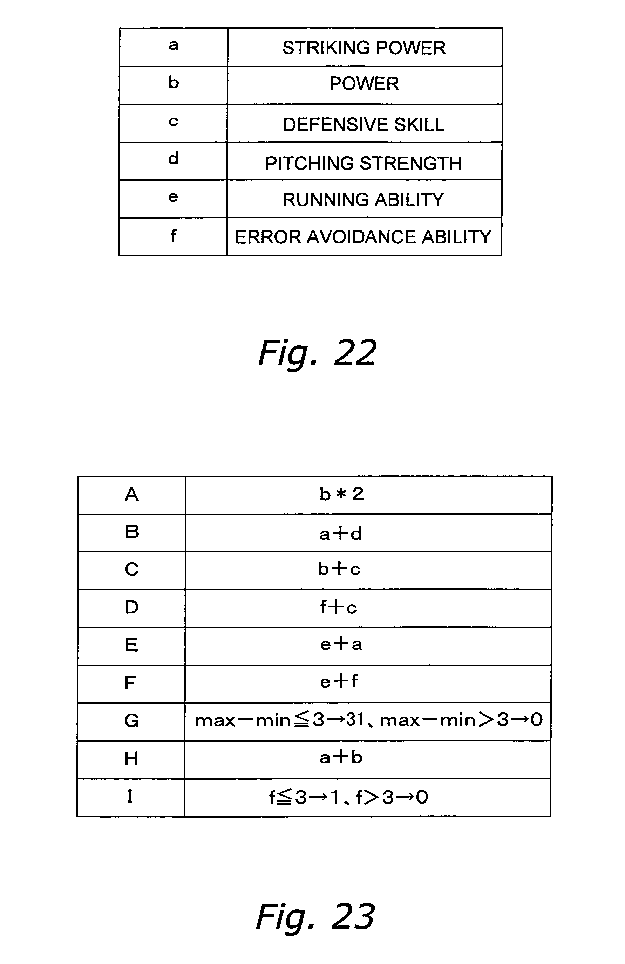

With reference to a flowchart illustrated in Fig. 20 and respective correspondence tables of Figs. 22-28, an automatic composition processing for creating a supporter's music only by the CPU based on information of a player character in accordance with a predetermined game condition without performing a processing of selecting a supporter's music by a game player will be hereinafter specifically explained.

In a player information quantifying processing of Step S21 illustrated in Fig. 20, a player's numerical value is set to be the integer number of 1-15, for instance, in response to information of a player character, specifically, information for indicating game character's specific ability and/or state, which includes, for example, the general ability such as baseball player's power, striking power, pitching strength, defensive skill, running ability, error avoidance ability, physical strength, and ball trajectory, and the specialized ability such as sense, power hitter, average hitter, and spray hitter. Furthermore, as illustrated in Fig. 22, numeric values of baseball player's striking power, power, defensive skill, pitching strength, running ability, and error avoidance ability, are specifically set to be a, b, c, d, e, and f, respectively. Here, for example, as illustrated in a lower portion of Fig. 21, the numeric values are respectively set as follows so as to be the player numeric value of a player character having properties of the first and second batters with high striking power and high running ability: a=15, b=6, c=8, d=7, e=12, and f=5. When the player information quantifying processing of Step S21 is performed, a player numeric value converting processing for converting player numeric values of a player character into predetermined player variables is performed (S22).

Specifically, as illustrated in Fig. 23, in the player numeric value converting processing of Step S22, a player variable of a player character is determined by performing the following arithmetical operation: A = b*2; B = a + d; C = b + c; D = f + c; E = e + f; G = 31, if (the maximum value of "a" to "f") - (the minimum value of "a" to "f") is less than or equal to 3; G = 0, if (the maximum value of "a" to "f") - (the minimum value of "a" to "f") is greater than 3; H = a + b; I = 1, if "f" is less than or equal to 3; H = 0, if "f" is greater than 3. Here, the player variables of a player character are calculated as follows: A = b*2 = 6*2 = 12; B = a + d = 15 + 17 = 22; C = b + c = 6 + 8 = 14; D = f + c = 5 + 8 = 13; E = e + a = 12 + 15 = 27; F = e + f= 12 + 5 = 17; G = 0 (max - min = E - A = 27 - 12 = 15 > 3); H = a + b = 15 + 6 = 21; I = 0 (f = 5 > 3). With the calculation of these player variables, compared to a case that player numeric values are directly compared as performed in the above described embodiment, it is possible to prevent a game player from easily understanding trend of composition by the CPU 7, and it is also possible to increase repertoire of composition by simultaneously using a plurality of player numeric values in the player variables. When the player numeric value converting processing of Step S22 is performed, a player variable comparing processing for comparing respective player variables is performed (S23).

In the player variable comparing processing, magnitudes of player variables A-G are compared within the player variables obtained in the player numeric value converting processing of Step S22. Specifically, the following player variables are obtained: E = 27 > B = 22 > F = 17 > C = 14 > D = 13 > A = 12 > G = 0. The comparative data in which the maximum value of player variables A-G is E (= 27) and the second largest value of the player variables A-G is B (= 22) is stored.

Next, based on the player numeric values obtained in the player information quantifying processing of Step S21, the player variables obtained in the player numeric value converting processing of Step S22, and the comparative data obtained in the player variable comparing processing of Step S23, a supporter's music data quantifying processing for quantifying a variety of information to be used for generating a supporter's music of a player character is performed (S24). Specifically, in the supporter's music data quantifying processing of Step S24, supporter's music data numeric values for creating a supporter's music is created depending on the player numeric values a-f, the player variables A-I, and the comparative data of player variables A-G.

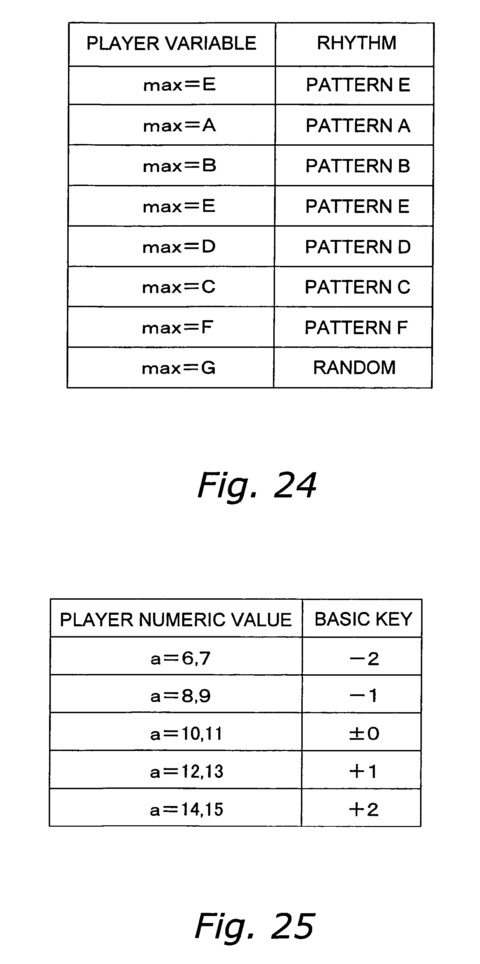

Specifically, supporter's music data numeric values for creating a supporter's music is determined based on respective correspondence tables illustrated in Figs. 24-28. The supporter's music data numeric values are determined for each bar or each half-bar, and a sort of rhythm, a basic key, a sort of tempo, existence or nonexistence of introduction, a sort of cheers, a chord, and the like are determined thereby.

First, the maximum value (max) in the player variables A-G is determined in the comparative data calculated in the player variables comparing processing of Step S23, and rhythm of a supporter's music is determined based on the correspondence table illustrated in Fig. 24. When the maximum value in the player variables A-G is E, the rhythm "pattern E" that is the same as that of Fig. 10 in the above described embodiment is determined. In the similar way to the above, when the maximum values in the player variables A-G are A-F, the rhythms "pattern A" to "pattern F" that are the same as those in Figs. 11-16 in the above described embodiment are determined. Also, when the maximum value in the player variables A-G is G, one of the rhythms of "pattern A" to "pattern F" is randomly determined based on the arithmetical operation of random number. Here, the maximum value (max) in the player variables A-G is E (= 27). Accordingly, the rhythm is determined to be "pattern E."

Next, the player numeric value of "a" is extracted from the player numeric values obtained in the player information quantifying processing of Step S21, and the basic key of a supporter's music is determined based on the correspondence table illustrated in Fig. 25. Here, increase and decrease of the basic key are respectively expressed with "+" and "-" and a numeric value corresponding to a half-step is set to be "1." When the player value of "a" is 6 or 7, the basic key is set to be "-2." When the player value of "a" is 8 or 9, the basic key is set to be "-1." When the player value of "a" is 10 or 11, the basic key is set to be "+-0." When the player value of "a" is 12 or 13, the basic key is set to be "+1." When the player's value of "a" is 14 or 15, the basic key is set to be "+2." Here, the value of "a" is 15 (a = 15), the basic key is determined to be "+2" thereby.

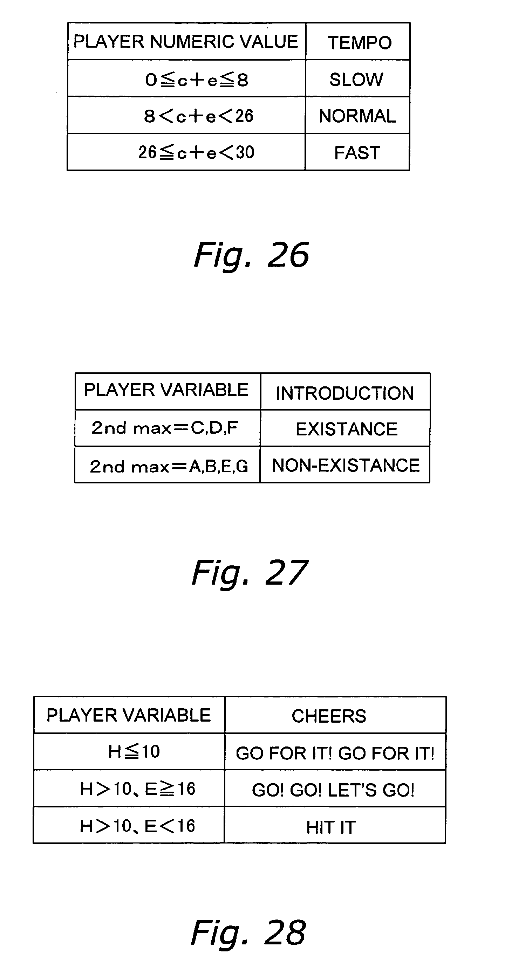

Next, the player numeric value of "c + e" is extracted from the player numeric values obtained in the player information quantifying processing of Step S21, and the tempo of a supporter's music is determined based on the correspondence table illustrated in Fig. 26. When the player numeric value of "c + e" is greater than or equal to 0 and less than or equal to 8, the tempo is determined to be "slow." When the player numeric value of "c + e" falls in the range from 8 to 26, the tempo is determined to be "normal." When the player numeric value of "c + e" is greater than or equal to 26 and less than 30, the tempo is determined to be "fast." Here, the value of "c + e" is: 8 < c + e = 8 + 12 = 20 < 26, and the tempo is determined to be "normal" thereby.

Next, the second largest value (2nd max) in player variables A-G is determined in the comparative data calculated in the player variables comparing processing of Step S23, and existence or nonexistence of introduction of a supporter's music is determined based on the correspondence table illustrated in Fig. 27. The introduction is set in the first bar of a supporter's music and is configured not to be played in the second playing and the subsequent loop playing. When the second largest values in the player variables A-G are C, D, and F, the introduction is set to be "existence." When the second largest values of the player's variables A-G are A, B, E, and G, the introduction is set to be "nonexistence." Here, the second largest value of the player variables A-G is B (= 22). Accordingly, the introduction is set to be "nonexistence."

Next, the player numeric values of H and E are extracted from the comparative data calculated in the player variables comparing processing of Step S23, and the sort of cheers of a supporter's music is determined based on the correspondence table illustrated in Fig. 28. The sort of cheers is set in the tenth bar of a supporter's music, and audio of the name of a player character is outputted in the eleventh bar of a supporter's music. When H is less than or equal to 10, the sort of cheers is set to be "Go for it! Go for it!." When H is greater than 10 and E is greater than or equal to 16, the sort of cheers is set to be "Go! Go! Let's go!." When H is greater than 10 and E is less than 16, the sort of cheers is set to be "Hit it." Here, the values of H and E are as follows: H = 21 > 10; E = 27 > 16, and the sort of cheers is set to be "Go! Go! Let's go!" thereby.

Note that methods of creating chord and melody are almost the same as those of the above described embodiment, and thus explanation thereof will be omitted. However, chord and melody herein are set to be "major chord" and "melody suitable for a player character having properties of the first or second batter," respectively. Also, here, the value of I is zero (I = 0), and melody is not changed thereby. However, when the value of I is not zero (I ≠ 0), numeric values corresponding to the heights of all the note characters 33 are converted into the even number, and thus melody is configured to be changed to be the whole tone melody in which melody is formed only by whole tones.

The supporter's music data numeric values for creating a supporter's music with the following configuration is created by the supporter's music data quantifying processing of Step S24: rhythm = "pattern E"; basic key = "+2"; tempo is "normal"; introduction = "nonexistence"; cheers = "Go! Go! Let's go!"; chord = "major chord"; melody = "melody suitable for a player character having properties of the first or second batter."

When the supporter's music data quantifying processing of Step S24 is performed, a supporter's music data creating processing for creating a supporter's music of a player character is performed based on the supporter's music data numeric values for creating a supporter's music (S25). In the supporter's music data creating processing of Step S25, based on the supporter's music data numeric value that is determined in the supporter's music data quantifying processing of Step S24, a supporter's music data with the following configuration is created : rhythm = "pattern E"; basic key = "+2"; tempo is "normal"; introduction = "nonexistence"; cheers = "Go! Go! Let's go!"; chord = "major chord"; melody = "melody suitable for a player character having properties of the first or second batter." The supporter's music data created in the supporter's music data creating processing of Step S25 is stored in the storage unit 2 by a supporter's music data storing processing (S26).

Here, the created supporter's music of a player character is determined only by the CPU 7 based on information of a player character in accordance with a predetermined game condition. Therefore, it is possible to create a supporter's music without game player's intension depending on development of a player character. Accordingly, it is possible to realize a baseball game with reality, which is more like the real-world baseball.

### [Industrial Applicability]

According to the present invention, in the game program, information of a game character is quantified by the game information quantifying function depending on a predetermined game condition, and a variety of information for generating a game sound is quantified by the game sound quantifying function depending on a plurality of numeric values obtained by the game information quantifying function. Furthermore, a game sound is generated by the game sound generating function depending on a plurality of numeric values obtained by the game information quantifying function. Accordingly, it is possible to realize a game with reality.

## Claims

1. A game program for realizing functions in a computer, the computer being capable of realizing a game that a game character is caused to perform an action therein, the functions comprising:
a game information quantifying function for quantifying information about the game character depending on a predetermined game condition;
a game sound quantifying function for quantifying a variety of information for generating a game sound depending on a plurality of numeric values obtained by the game information quantifying function; and
a game sound generating function for generating the game sound depending on a plurality of numeric values obtained by the game sound quantifying function.

2. The game program of claim 1, wherein the functions further includes an event judging function for judging if a predetermined event is performed, and a game sound playing function for playing the game sound generated by the game sound generating function when the predetermined event is judged to be performed by the event judging function.

3. A game device for realizing a game that a game character is caused to perform an action therein, comprising:
game information quantifying means for quantifying information about the game character depending on a predetermined game condition;
game sound quantifying means for quantifying a variety of information for generating a game sound depending on a plurality of numeric values obtained by the game information quantifying means; and
game sound generating means for generating the game sound depending on a plurality of numeric values obtained by the game sound quantifying means.

4. A game method for realizing a game that a game character is caused to perform an action therein with a computer, comprising:
a game information quantifying step for quantifying information about the game character depending on a predetermined game condition;
a game sound quantifying step for quantifying a variety of information for generating a game sound depending on a plurality of numeric values obtained by the game information quantifying step; and
a game sound generating step for generating the game sound depending on a plurality of numeric values obtained by the game sound quantifying step.
